Europäisches Patentamt

European Patent Office

Office européen des brevets

(19)

(11) Publication number: **0 397 536**

**A2**

# EUROPEAN PATENT APPLICATION

(12)

(21) Application number: 90305172.0

(51) Int. Cl.5: **H04L 27/00, H04L 25/49**

(22) Date of filing: **14.05.90**

(30) Priority: **12.05.89 US 351849**

(43) Date of publication of application:
**14.11.90 Bulletin 90/46**

(84) Designated Contracting States:
**AT BE CH DE DK ES FR GB GR IT LI LU NL SE**

(71) Applicant: **CODEX CORPORATION**
**20 Cabot Boulevard**
**Mansfield Massachusetts 02048(US)**

(72) Inventor: **Forney, David G.**
**6 Coolidge Hill Road**
**Cambridge, Massachusetts 02138(US)**
Inventor: **Eyuboglu, Vedat M.**
**566 Commonwealth Avenue No. 1005**
**Boston, Massachusetts 02215(US)**

(74) Representative: **Deans, Michael John Percy et al**
**Lloyd Wise, Tregear & CO. Norman House**
**105-109 Strand**
**London WC2R OAE(GB)**

(54) **Apparatus for generating sequences of digital signals.**

(57) Apparatus is described for generating a sequence of digital signals $x_k$ and/or a sequence of digital signals $y_k$,
$k = 1, 2, \ldots$, such that $y_k = \Sigma_{j\geq 0} f_j x_{k-j}$, in which the $y_k$ signals are a sequence in a given modulation code. In one arrangement, the signals $y_k$ are chosen to be congruent to coset representatives specified in accordance with a modulation code, a plurality of code constellations are used, and at least one constellation include both a point with a positive sum of coordinates and one with a negative sum of coordinates.

FIG. 18

# APPARATUS FOR GENERATING SEQUENCES OF DIGITAL SIGNALS

This invention relates to the generation of sequences of digital signals in a modulation code.

In modulation coding, symbols are encoded as signals drawn from a constellation in such a way that only certain sequences of signals are possible.

In recent years, a number of kinds of trellis-type modulation codes have been developed and applied (e.g., in modems) to realize coding gains of 3 to 6 dB over high-signal-to-noise-ratio, band-limited channels such as voice grade telephone channels.

Early trellis codes were due to Ungerboeck (Cjsaka et al., U.S. Patent No. 3,877,768; Ungerboeck, "Channel Coding with Multilevel Phase Signals," IEEE Transactions on Information Theory, Vol. IT-28, pp. 55-67, January, 1982). Ungerboeck's codes for sending n bits per symbol are based on 4-subset or 8-subset partitions of one-dimensional (PAM) or two-dimensional (QAM) $2^{n+1}$-point signal constellations, combined with a rate-1/2 or rate-2/3 linear binary convolutional code that determines a sequence of subsets. A further set of "uncoded" bits then determines which signal points within the specified subsets are actually sent. The partition and the code are designed to guarantee a certain minimum squared distance $d^2_{m\ in}$ between permissible sequences of signal points. Even after giving effect to the power cost of an expanded signal constellation (a factor of four (6 dB) in one dimension, or a factor of two (3 dB) in two dimensions), the increase in minimum squared distance yields a coding gain that ranges from about a factor of two (3 dB) for simple codes up to a factor of four (6 dB) for the most complicated codes, for values of n that may be as large as desired.

Gallager (U.S. Patent No. 4,755,998, issued July 5, 1988, discussed in Forney et al., "Efficient Modulation for Band-Limited Channels," IEEE J. Select. Areas Commun., Vol. SAC-2, pp. 632-647, 1984) devised a multidimensional trellis code based on a 16-subset partition of a four-dimensional signal constellation, combined with a rate-3/4 convolutional code. The four-dimensional subset is determined by selecting a pair of two-dimensional subsets, and the points of the four-dimensional signal constellation are made up of pairs of points from a two-dimensional signal constellation. With only an 8-state code, a $d^2_{m\ in}$ of four times the uncoded minimum sequence distance can be obtained, while the loss due to expanding the signal constellation can be reduced to about a factor of $2^{1/2}$ (1.5 dB), yielding a net coding gain of the order of 4.5 dB. A similar code was designed by Calderbank and Sloane ("Four-dimensional Modulation With An Eight-State Trellis Code", AT&T Tech. J.,

Vol. 64, pp. 1005-1018, 1985; U.S. Patent No. 4,581,601).

Wei (U.S. Patent 4,713,817, issued December 15, 1987) devised a number of multidimensional codes based on partitions of constellations in four, eight, and sixteen dimensions, combined with rate-(n-1)/n convolutional codes. His multidimensional constellations again consist of sequences of points from two-dimensional constituent constellations. The codes are designed to minimize two-dimensional constellation expansion, to obtain performance (coding gain) versus code complexity over a broad range, and for other advantages such as transparency to phase rotations. calderbank and Sloane, "New Trellis Codes", IEEE Trans. Inf. Theory, to appear March, 1987; "An Eight-dimensional Trellis Code," Proc. IEEE, Vol. 74, pp. 757-759, 1986 have also devised a variety of multidimensional trellis codes, generally with similar performance versus complexity, more constellation expansion, but in some cases fewer states.

All of the above codes are designed for channels in which the principal impairment (apart from phase rotations) is noise, and in particular for channels with no intersymbol interference. The implicit assumption is that any intersymbol interference introduced by the actual channel will be reduced to a negligible level by transmit and receive filters; or, more specifically, by an adaptive linear equalizer in the receiver. Such a system is known to work well if the actual channel does not have severe attenuation within the transmission bandwidth, but in the case of severe attenuation ("nulls" or "near nulls") the noise power may be strongly amplified in the equalizer ("noise enhancement").

A well-known technique for avoiding such "noise enhancement" is to design the signaling system for controlled intersymbol interference rather than no intersymbol interference. The best-known schemes of this type are called "partial response" signaling schemes (Forney, "Maximum Likelihood Sequence Estimation of Digital Sequences in the Presence of Intersymbol Interference," IEEE Trans. Inform. Theory, Vol. IT-18, pp. 363-378, 1972).

In a typical (one-dimensional) partial response scheme, the desired output $y_k$ at the receiver is designed to be the difference of two successive inputs $x_k$, i.e., $y_k = x_k - x_{k-1}$, rather than $y_k = x_k$. In sampled-data notation using the delay operator D, this means that the desired output sequence y(D) equals x(D)(1-D) rather than x(D); this is thus called a "1-D" partial response system. Because the spectrum of a discrete-time channel with impulse response 1-D has a null at zero frequency (DC), the combination of the transmit and receive filters with the actual channel likewise must have a DC null to achieve this desired response. On a channel which has a null or a near null at DC, a receive equalizer designed for a 1-D desired response will introduce less noise enhancement than one designed to produce a perfect (no intersymbol interference) response.

Partial response signaling is also used to achieve other objectives, such as reducing sensitivity to channel impairments near the band edge, easing filtering requirements, allowing for pilot tones at the band edge, or reducing adjacent-channel interference in frequency-division multiplexed systems.

Other types of partial response systems include a $1+D$ system which has a null at the Nyquist band edge, and a $1-D^2$ system which has nulls at both DC and the Nyquist band edge. A quadrature (two-dimensional) partial response system (QPRS) can be modeled as having a two-dimensional complex input; the (complex) response $1+D$ results in a QPRS system which has nulls at both the upper and lower band edges in a carrier-modulated (QAM) bandpass system. All of these partial response systems are closely related to one another, and schemes for one are easily adapted to another, so one can design a system for the 1-D response, say, and easily extend it to the others.

Calderbank, Lee, and Mazo ("Baseband Trellis Codes with A Spectral Null at Zero"; submitted to IEEE Trans. Inf. Theory) have proposed a scheme to construct trellis-coded sequences that have spectral nulls, particularly at DC, a problem that is related to the design of partial response systems, even though its objectives are in general somewhat different. Calderbank et al. have adapted known multidimensional trellis codes with multidimensional signal constellations to produce signal sequences with spectral nulls by the following technique. The multidimensional signal constellation has twice as many signal points as are necessary for the non-partial-response case, and is divided into two equal size disjoint subsets, one of multidimensional signal points whose sum of coordinates is less than or equal to zero, the other whose sum is greater than or equal to zero. A "running digital sum" (RDS) of coordinated, initially set to zero, is adjusted for each selected multidimensional signal point by the sum of its coordinates. If the current RDS is nonnegative, then the current signal point is chosen from the signal subset whose coordinate sums are less than or equal to zero; if the RDS is negative, then the current signal point is chosen from the other subset. In this way the RDS is kept bounded in a narrow range near zero, which is known to force the signal sequence to have a spectral null at DC. At the same time, however, the signal points are otherwise chosen from the subsets in the same way as they would have been in a non-partial-response system: the expanded multidimensional constellation is divided into a certain number of subsets with favorable distance properties, and a rate-(n-1)/n convolutional code determines a sequence of the subsets such that the minimum squared distance between sequences is guaranteed to be at least $d_m^2$ in. The coding gain is reduced by the constellation doubling (by a factor of $2^{1/2}$, or 1.5 dB, in four dimensions, or by a factor of $2^{1/4}$, or 0.75 dB in eight), but otherwise similar performance is achieved as in the non-partial response case with similar code complexity.

A generalized partial response is any response $f(D) = f_0 + f_1 D + f_2 D^2 + ...$, where the number of terms may be finite or infinite. By appropriate scaling we may always normalize a generalized partial response so that $f_0 = 1$. Then the channel input sequence and output sequence are related by

$y(D) = x(D)f(D)$

in D-transform notation, or by

$y_k = \Sigma_{j \geq 0} f_j x_{k-j}$
$= x_k + \Sigma_{j \geq 1} f_j x_{k-j}$

A so-called Tomlinson filter (Price, "Nonlinearly feedback-equalized PAM versus capacity for noisy filter channel," ICC Conf. Record, pp. 22-12 to 20-17, 1972), and the references therein) is a method of equalizing a generalized partial response channel as follows. In the transmitter, a real M-level pulse-amplitude-modulation (PAM) sequence i(D) is converted to a transmitted sequence x(D) by the following formula:

$x(D) \equiv i(D)/f(D)$ modulo 2M.

Here the terms $i_k$ of i(D) are drawn from the M-level PAM constellation $\{\pm 1, \pm 3 ..., \pm(M-1)\}$, and the nonlinear 'modulo 2M' operation selects the unique $x_k$ congruent to $\Sigma_{j \geq 0} g_j i_{x-j}$ modulo 2M in the range from -M to M, where $g(D) = 1/f(D)$ is the formal inverse of f(D). It follows that

$y(D) = x(D)f(D) \equiv i(D)$ modulo 2M,

so that at the output of the channel the output symbols $y_k$ are the same distance apart as the symbols in the original PAM constellation, and can be mapped back to the $i_k$ by the memoryless operation

$i_k \equiv y_k$ mod 2M.

In one aspect thereof, the invention provides apparatus for generating a sequence of digital signals $x_k$ and/or a sequence of digital signals $y_k$ (the sequence $y_k$ being in accord with a given modulation code), $k = 1, 2, ...,$ such that the relationship between the $x_k$ signals and $y_k$ signals is $y_k = x_k + \Sigma_j \geq 1 f_j x_{k-j}$ where all symbols may be real or complex. An encoder selects J signals $y_k$, $J \geq 1$, $(y_k, y_{k+1}, ... y_{k+J-1})$ to be congruent to a sequence of J coset representatives $c_k$ (modulo M), M an integer, specified in accordance with the given modulation code, the J symbols being chosen from one of a plurality of J-dimensional constellations, the choice being based on at least a previous $x_k'$, $k' < k$. At least one of the constellations includes both a point with a positive sum of coordinates, and another point with a negative sum of coordinates. The encoder is arranged so that the signals $x_k$ have finite variance $S_x$.

In an alternative aspect thereof, the invention provides an encoder that selects the signals $x_k$ to be congruent to a sequence of alternative coset representatives $c_k$ (modulo M), where

$c_k' = \Sigma_j \geq 0 f_j c_{k-j}$ (modulo M),

in the case where the $f_j$ are real, or more generally

$c_k' = \Sigma_j \geq 0 f_j c_{k-j}$ modulo $\Lambda_c$.

The encoder may cause the $x_k$ and $y_k$ signals to have any selected variances $S_x$ and $S_y$ within predetermined ranges.

According to a third alternative aspect thereof, there is provided, according to the invention, apparatus for generating a sequence of digital signals $x_k$ and/or a sequence of digital signals $y_k$, k = 1, 2, ..., such that the relationship between the $x_k$ signals and $y_k$ signals is $y_k = \Sigma_j \geq 0 f_k x_{k-j}$, said signals $y_k$ being a sequence in a given modulation code; said apparatus being characterised in that it comprises an encoder adapted for operatively selecting J said signals $y_k$, J $\geq$ 1, $(y_k, y_{k+1}, ...y_{k+J-1})$ to be congruent to a sequence of J coset representatives $c_k$ (modulo M), M being an integer, and said coset representatives being specified in accordance with said given modulation code; in that said encoder is adapted to choose said J symbols from one of a plurality of J-dimensional constellations, said choice being based on at least a previous $x_k'$, $k' < k$, and at least one of said constellations comprising both a point with a positive sum of coordinates and another point with a negative sum of coordinates; and in that said encoder is operatively arranged so that said signals $x_k$ have finite variance $S_x$.

There is provided, in a fourth alternative aspect thereof, apparatus for generating a sequence of digital signals $x_k$ and/or a sequence of digital signals $y_k$, k = 1, 2, ..., such that the relationship between the $x_k$ signals and $y_k$ signals is $y_k = x_k + \Sigma_j \geq 1 f_k x_{k-j}$, said signals $y_k$ being a sequence in a given modulation code; said apparatus being characterised in that it comprises an encoder adapted for operatively selecting said signals $x_k$ to be congruent to a sequence of alternative coset representatives $c_k'$ (modulo M), where

$c_k' = c_k - \Sigma_j \geq 1 f_j c_{k-j}$ (modulo M),

in the case when $f_j$ is real, or

$c_k' = c_k - \Sigma_j \geq 1 f_j c_{k-j}$ (modulo $\Lambda_c$)

in general, and where the $c_k$ sequence is a coset representative sequence specified in accordance with said modulation code.

In a fifth alternative aspect of this invention, there is provided apparatus for generating a sequence of digital signals $x_k$ and/or a sequence of digital signals $y_k$, k = 1, 2, ..., such that the relationship between the $x_k$ signals and $y_k$ signals is $y_k = \Sigma_j \geq 0 f_j x_{k-j}$, said symbols $y_k$ being a sequence in a given modulation code, said apparatus being characterised in that it comprises an encoder adapted to cause said $x_k$ and $y_k$ signals to have any selectable variances $S_x$ and $S_y$ within predetermined ranges.

In preferred embodiments, either the $x_k$ or $y_k$ sequence may be delivered as an output; the code may be a trellis code or a lattice code; M may be 2 or 4 or a multiple of 4 or 2 + 2i; J may be 1 or the same as the number of dimensions in the modulation code; there are a finite set of (e.g., two non-disjoint) J-dimensional constellations; $y_k$ and $x_k$ may be real valued or complex valued.

Embodiments of our apparatus may adapt known modulation codes, particularly trellis codes, for use in generalised partial response systems to achieve the same kinds of advantages that trellis codes have in non-partial response systems -- notably, substantial coding gains for arbitrarily large numbers n of bits/symbol with reasonable decoding complexity. The invention also enables the design of trellis codes for generalised partial response systems in such a way as to achieve both a relatively low input signal power $S_x$ and a relatively low output power $S_y$, and permits smoothly trading off these two quantities against each other. Furthermore, higher-dimensional trellis codes can be adapted for use in generalized partial response systems which are inherently lower-dimensional.

Other advantages and features will become apparent from the following description of preferred embodiments, with reference to the accompanying drawings, in which:-

Figure 1 is a block diagram of a 1-D partial response channel ;

Figure 2 is a block diagram of an encoder for an 8-state Ungerboeck code;

Figure 3 is a signal constellation for the Ungerboeck code partitioned into 8 subsets;

Figure 4 is a block diagram of an equivalent encoder for the Ungerboeck code ;

Figure 5 is a block diagram of a generalized N-dimensional trellis encoder;

Figure 6 is a block diagram of a modified Figure 5, based on coset representatives;

Figure 7 is a block diagram of an equivalent one-dimensional encoder;

Figure 8 is a block diagram of a generalized N-dimensional trellis encoder;

Figure 9 is a block diagram of a generalized encoder with coset precoding;

Figure 10 is a block diagram combining Figures 8 and 9 ;

Figure 11 is a block diagram of an encoder with RDS feedback and coset precoding ;

Figures 12, 13, 14 are alternative embodiments of Figure 11;

Figures 15, 16, 17 are block diagrams of three equivalent filtering arrangements;

Figure 18 is a block diagram of a generalized decoder ;

Figures 19, 20, 21 are block diagrams of alternative encoders;

Figure 22 is an alternative signal constellation;

Figure 23 is a block diagram of an encoder for use with the constellation of Figure 22;

Figures 24, 25, 26 are block diagrams of three equivalent encoders;

Figure 27 is a block diagram of an alternative decoder;

Figure 28 is a schematic diagram of an expanded signal constellation ;

Figure 29 is a rhombus for use with the constellation of Figure 28 ;

Figure 30 is a block diagram of a two-dimensional RDS feedback encoder;

Figure 31 is a diagram of the dimensions of a rhombus for use with the constellation of Figure 28 ;

Figure 32 shows a pair of constellations; and

Figure 33 shows two disjoint constellations.

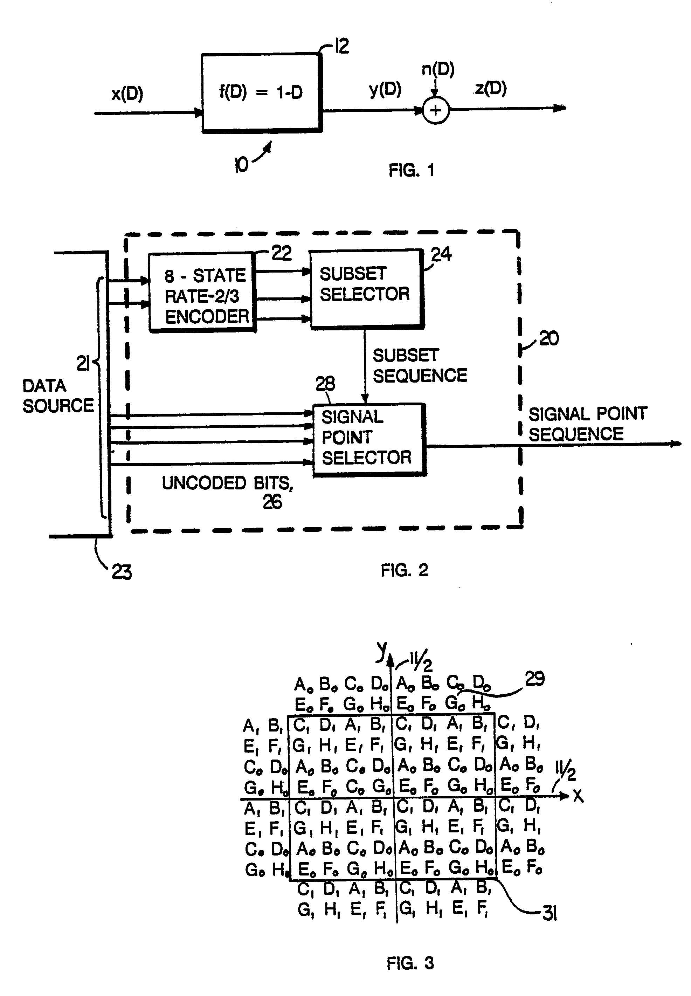

Referring to Figure 1, we shall first describe a technique for generating signal sequences to be used as inputs for a generalized (causal) partial response channel 10 having a response $f(D)$, for example, if $f(D) = 1\text{-}D$, a one-dimensional (real) partial response baseband system with a null at DC. Each output signal $z_k$ of such a system is given by

$$z_k = y_k + n_k,$$

where the $n_k$ sequence ($n(D)$) represents noise, and the $y_k$ sequence ($y(D)$) is a generalized partial-response-coded (PRC) sequence defined by

$$y_k = \Sigma_{j \geq 0} f_j x_{k\text{-}j},$$

where the $x_k$ sequence ($x(D)$) is the sequence of channel inputs. All sequences may be real or complex.

In general, the first term $f_0$ of $f(D)$ can be normalized to 1. Such a response $f(D)$ has a formal inverse $g(D) = 1/f(D)$ with $g_0 = 1$ such that $x(D)$ can be recovered from $y(D)$ by passing $y(D)$ through $g(D)$. For example, the response $g(D) = 1 + D + D^2 + \ldots$ is the formal inverse to $f(D) = 1 - D$ and creates a running digital sum $x(D)$ from $y(D)$.

In other words, in this example, because

$$x_k = x_{k\text{-}1} + y_k,$$

the $x_k$ sequence can be recovered from the $y_k$ sequence by forming a running digital sum of the $y_k$ values (given an initial value for the $x_k$ sequence); thus we call the $x_k$ sequence the RDS sequence. In this case, and in general, the formal inverse $1/f(D)$ is not stable. For generalized $f(D)$ we may call

$$x(D) = y(D)/f(D) = y(D)g(D)$$

a generalized RDS of $y(D)$. The sample variances of the sequence $x(D)$ and the sequence $y(D)$ will be denoted as $S_x$ and $S_y$, respectively.

The discrete-time partial response 1-D (represented by block 12) is a composite of the responses of a chain of transmit filters, an actual channel, receive filters, equalizers, samplers, etc., designed in a conventional way to achieve a composite partial response 1-D with the noise power P (of the noise sequence $n(D)$) being small relative to the PRC power $S_y$. We shall thus want to send a relatively large number n of bits per channel input. A detector (not shown) operates on the noisy PRC sequence $z(D)$ to estimate $x(D)$ (or equivalently y-(D)), since there is a one-to-one relationship between them). If the detector is a maximum likelihood sequence estimator, then, to first order, the objective is to maximize the minimum squared distance $d_m^2$ in between permissible PRC sequences $y(D)$.

In some applications, the design constraint will simply be to minimize the sample variance $S_x$ of the RDS (input) sequence. In others, the constraint will be on $S_y$. In still other applications, there will be an effective power constraint somewhere in the middle of the composite filter chain, so that it will be desirable to keep both $S_x$ and $S_y$ small, and in fact to provide for a smooth design tradeoff between them. In the general case, the objective may be to minimize $S_x$, to minimize $S_y$ while bounding $S_x$, or to optimize the tradeoff between them.

A related problem is the design of sequences with spectral nulls, e.g., a null at zero frequency (DC). There the objective may be to design sequences $y(D)$ that can represent n bits per sample, that have a spectral null, that have as small a sample variance $S_y$ as possible, but that also have a large minimum squared distance $d_m^2$ in between possible $y(D)$ sequences. A common auxiliary objective is to keep the variation of the generalized running digital sum (RDS) of the $y(D)$ sequence limited as well, for systems reasons. Because the generalized running digital sum sequence $x(D)$ is, e.g., $y(D)/(1\text{-}D)$, and its sample variance $S_x$ is a measure of its variation, the present invention may also be applicable to the design of sequences with spectral nulls.

A number of design principles are useful in achieving our objectives. The first principle is to design the input (RDS) sequence $x(D)$ so that the output generalized (PRC) sequence $y(D)$, taken N values at a time, is a sequence of N-dimensional signal points belonging to subsets of an N-dimensional constellation determined by a known N-dimensional trellis code. Then the minimum squared distance $d_{m\,in}^2$ between generalized PRC sequences will be at least the $d_{m\,in}^2$ guaranteed by the trellis code. Furthermore, a maximum likelihood sequence estimator for the trellis code can be easily adapted for use with this system, and while perhaps not optimum, it will achieve the same effective $d_{m\,in}^2$ for essentially the same decoding complexity as for the same trellis code in a non-partial response system.

An illustrative embodiment of the present invention is based on a known 8-state 2-dimensional trellis code similar to that of Ungerboeck as described in the article cited above, which uses a 128-point two-dimensional constellation to send 6 bits per (two-dimensional) signal. (This is also similar to the code used in CCITT Recommendation V.33 for a 14.4 kbps data modem.) Figure 2 shows the encoder 20 for this code. For each six-bit symbol 21 delivered from a data source 23, 2 of the 6 input bits to encoder 20 enter a rate-2/3, 8-state convolutional encoder 22. The 3 output bits of this encoder are used in a subset selector 24 to select one of 8 subsets of a 128-point signal constellation, illustrated in Figure 3; there are 16 points in each subset (points in the eight subsets are labelled A through H respectively). The remaining 4 "uncoded bits" 26 (Figure 2) are used in a signal point selector 28 to select from the chosen subset the (two-dimensional) signal point to be transmitted. The code achieves a gain in $d_{m\,in}^2$ of a factor of 5 (7 dB) over an uncoded system, but loses about 3 dB in using a 128-point rather than a 64-point constellation, so the net coding gain is about 4 dB.

One-dimensional form of the 2-dimensional Ungerboeck code

The sequence of symbols $x_k$ sent over the channel is one-dimensional (real) in a 1-D baseband partial response system. It is helpful (though not essential), therefore, to transform known trellis codes into one-dimensional form. There are two aspects to this transformation: first, to characterize the two-dimensional subsets as compositions of constituent one-dimensional subsets, and second, to characterize the finite two-dimensional constellation as a composition of constituent one-dimensional constellations. We now show how this decomposition is done for the illustrative two-dimensional Ungerboeck code, and then indicate how it may be done in the general case of an N-dimensional trellis code.

The first step is to notice that each of the eight two-dimensional subsets A, B, ..., can be viewed as the union of two smaller two-dimensional subsets, say $A_0$ and $A_1$, $B_0$ and $B_1$, etc., where each of the 16 smaller subsets can be characterized as follows. Let the possible values of each coordinate of a signal point be partitioned into four classes a, b, c, d; then each of the smaller two-dimensional subsets consists of the points whose two coordinates are in a specified pair of classes. A convenient mathematical expression for this decomposition arises if we scale Figure 3 so that signal points are one unit apart in each dimension (and the coordinates of each point are half-integers); then the classes a, b, c, d are equivalence classes (modulo 4), and each of the 16 sets $A_0$, $A_1$, $B_0$, ... are the points whose two coordinates are congruent to a given pair (x, y) modulo 4, where x and y may each take on one of the four values {a, b, c, d}, e.g. {±1/2, ±3/2}. These four values are called (one-dimensional) 'coset representatives'. The points of the constellation of Figure 3 have been labeled with 0s and 1s to show one possible arrangement of the 16 subsets. For example the $G_0$ point 29 has coordinates x = 5/2, y = 9/2, and its coset representatives are (5/2, 9/2) modulo 4 or (-3/2, 1/2).

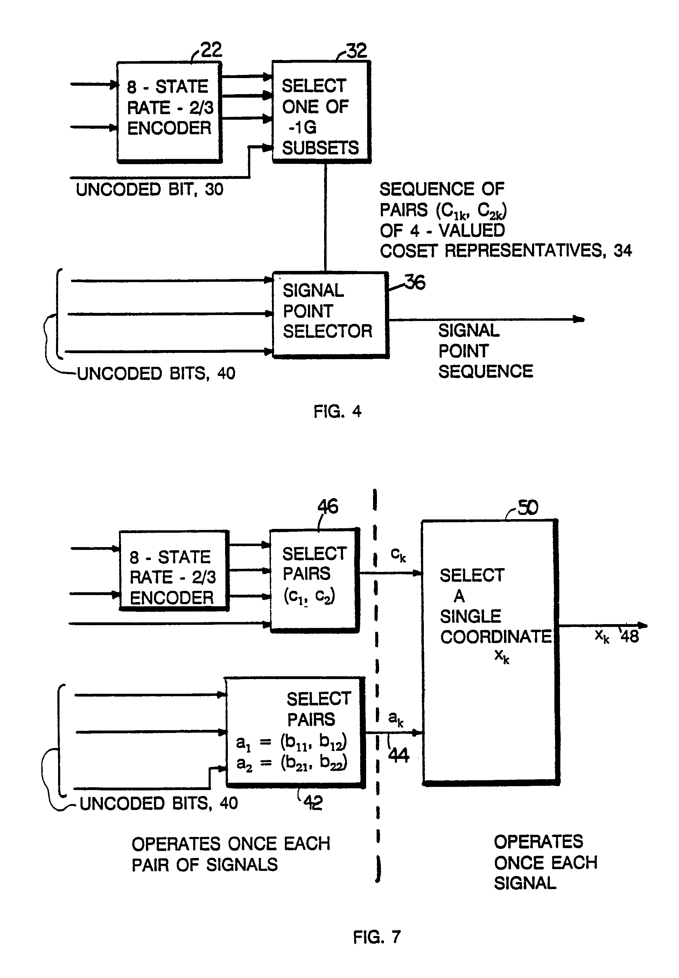

We may now modify Figure 2 as follows. Referring to Figure 4, the three output bits of the encoder 22 plus one of the uncoded bits 30 are used as inputs to subset selector 32, which selects one of 16 subsets based on the four input bits, with uncoded bit 30 selecting between $A_0$ and $A_1$, or $B_0$ and $B_1$, etc., according to which of the original 8 subsets is selected by the three convolutionally encoded bits produced by encoder 22. In effect, encoder 22 and bit 30 represent an 8-state rate-3/4 encoder, with the output selecting one of 16 subsets, although the set of possible signal point sequences has not changed. Next, designate each of these 16 smaller subsets by a pair of one-dimensional coset representatives 34, one for each coordinate, where each coset representative $c_k$ may take on one of four values. The pair of coset representatives is denoted $(c_{1k}, c_{2k})$.

All of the good codes cited above -- i.e., those of Ungerboeck, Gallager, Wei, and Calderbank and Sloane --can be transformed in the same way. That is, any of these N-dimensional trellis codes can be generated by an encoder that selects one of $4^N$ subsets, where the subsets are specified by N 4-valued one-dimensional coset representatives, corresponding to congruence classes of each coordinate (modulo 4). In some cases it is only necessary to use $2^N$ subsets specified by N 2-valued one-dimensional coset representatives (eNgN, {±1/2}) corresponding to congruence classes of each coordinate (modulo 2); e.g., for Ungerboeck's 4-state 2D code, Gallager's 8-state 4D code (and the similar code of Calderbank and Sloane), Wei's 16-state 4D code and 64-state 8D code, etc. Also, we have observed that many good lattice codes can be transformed in this way; e.g., the Schläfli lattice $D_4$ and the Gosset lattice $E_8$ can be represented by sequences of 4 or 8 two-valued one-dimensional coset representatives (modulo 2); the Barnes-Wall lattices $\Lambda_{16}$ and $\Lambda_{32}$ and the Leech lattice $\Lambda_{24}$ can be represented by four-valued one-dimensional coset representatives (modulo 4).

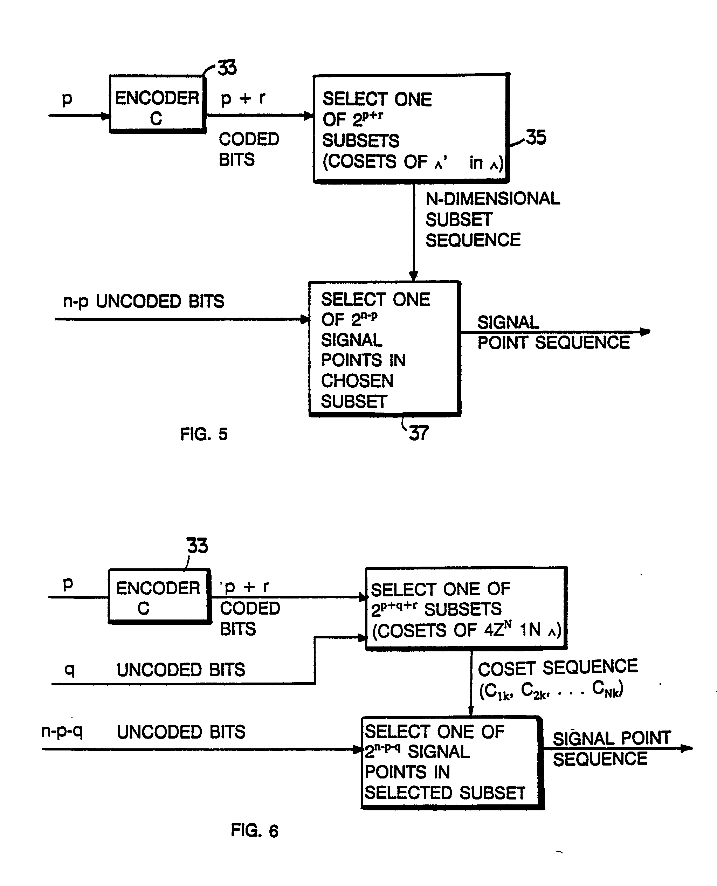

A general form for all of these codes is shown in Figure 5. The encoder is N-dimensional and operates once for every N signals to be sent over the channel. In each operation, p bits enter a binary encoder C 33 and are encoded into p + r coded bits. These coded bits select (in selector 35) one of $2^{p+r}$ subsets of an N-dimensional signal constellation (the subsets corresponding to the $2^{p+r}$ cosets of a sublattice $\Lambda'$ of an N-dimensional lattice $\Lambda$, the constellation being a finite set of $2^{n+r}$ points of a translate of the lattice $\Lambda$, such that each subset contains $2^{n-p}$ points). A further n - p uncoded bits selects (in selector 37) a signal point from the selected subset. Thus the code transmits n bits for every N-dimensional symbol, using a constellation of $2^{n+r}$ N-dimensional signal pointsN The encoder C and the lattice partition $\Lambda/\Lambda'$ ensure a certain minimum squared distance $d_{m\ in}^2$ between any two signal point sequences that belong to a possible subset sequence.

The observation above (about the transformability of all good codes) is the result of the mathematical observation that for all of the good trellis and lattice codes cited, the lattice $4Z^N$ of N-tuples of integer multiples of 4 is a sublattice of the lattice $\Lambda'$ (and in some cases $2Z^N$ is). Then, for some integer q, $\Lambda'$ is the union of $2^q$ cosets of $4Z^N$ in $\Lambda'$. The practical effect of this observation is that, provided that $n \geq q + p$, we can take the p + r coded bits plus q uncoded bits into a subset selector that selects one of $2^{q+p+r}$ cosets of $4Z^N$ in $\Lambda$, and further that these cosets can be identified by a sequence of N 4-valued one-dimensional coset representatives ($c_{1k}$, $c_{2k}$, ...,$c_{Nk}$), where the $c_{jk}$ represent integer-spaced equivalence classes (modulo 4). Thus already Figure 5 can be modified as shown in Figure 6. In this modification, we assume that the $2^{n+r}$-point signal constellation divides evenly into $2^{q+p+r}$ subsets, each containing the same number of signal points ($2^{n-q-p}$).

The illustrative Ungerboeck code embodiment is an example in which N = 2, $\Lambda = Z^2$, $\Lambda' = 2RZ^2$, p = 2, p + r = 3, q = 1, and n = 6.

The second step is to decompose the constellation into constituent one-dimensional constellations. For the constellation of Figure 3, each coordinate can take on one of 12 values which can be grouped as 8 'inner points' (e.g., {±1/2, ±3/2, ±5/2, ±7/2}) and 4 'outer points' (e.g., {±9/2, ±11/2}), as suggested by boundary 31 in Figure 3. There are 2 inner points and 1 outer point in each of the four one-dimensional equivalence classes (e.g., the class whose coset representative is + 1/2 contains the two inner points + 1/2 and -7/2, and the outer point 9/2, because these three points are congruent to + 1/2 (modulo 4). Given a coset representative, therefore, it is only necessary to specify whether a point is an inner point or an outer point and, if an inner point, which of the two inner points it is. This can be done with two bits, say $b_{1k}$ (= inner or outer) and $b_{2k}$ (= which inner) (or with one three-valued parameter $a_k$).

We may say that the pair ($b_{1k}$, $b_{2k}$) is a range identifying parameter $a_k$, which takes on one of three values, indicating the following three ranges

(a) from 0 to 4 (inner point, positive);

(b) from -4 to 0 (inner point, negative);

(c) from -6 to -4 and from 4 to 6 (outer point). The fact that each range spans a portion of the real line of total width 4 that contains exactly one point congruent to any real number (modulo 4) means that the range-identifying parameter $a_k$ plus the coset representative $c_k$ specify a unique signal point, for any value of $c_k$.

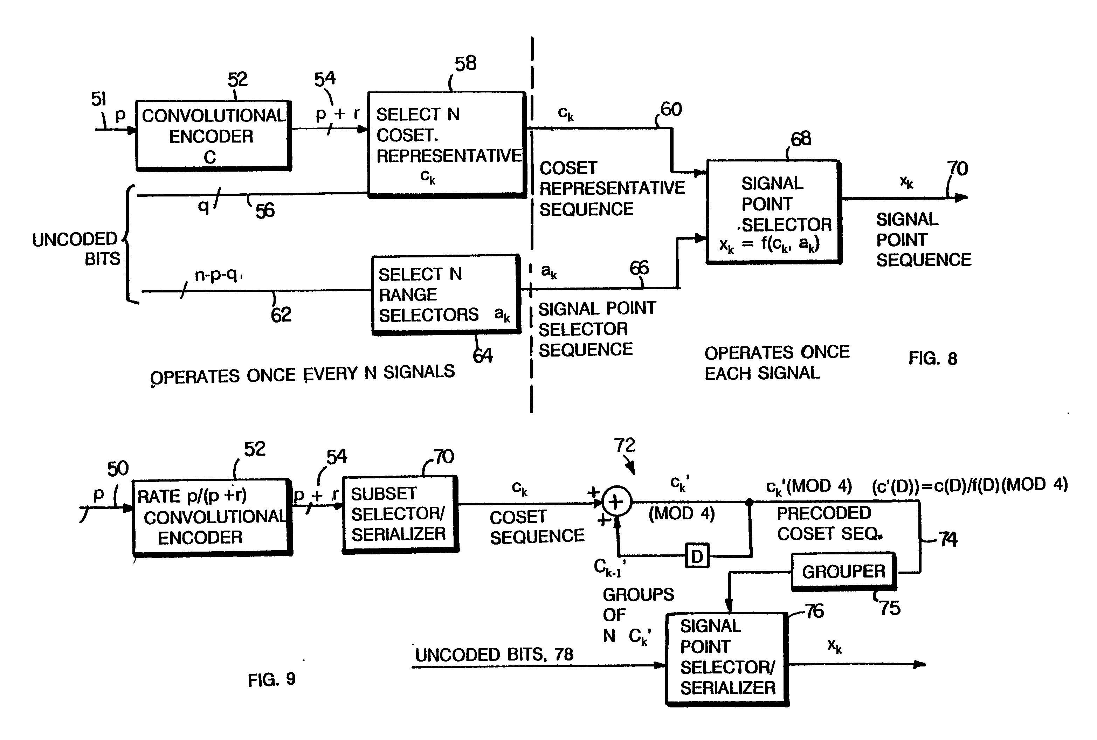

The signal point selector 36 of Figure 4 can then be decomposed as follows. Referring to Figure 7, three uncoded bits 40 enter a range-identifying parameter selection element 42 for each pair of coordinates. One uncoded bit determines whether any outer point is sent. If so, a second bit then determines which coordinate will contain the outer point, and the third bit selects which inner point in the other coordinate. If not, both coordinates are inner points, and the second and third bits select which inner point in each coordinate. Thus, in sum, element 42 maps the three uncoded input bits 40 into two pairs of output bits 44 $a_1 = (b_{11}, b_{12})$, and $a_2 = (b_{21}, b_{22})$, with each pair of bits used to determine one coordinate in conjunction with the corresponding coset representative, $c_1$ or $c_2$, generated by coset representative pair selector 46. Thus the whole encoder has been reduced to a form in which each coordinate $x_k$ (48) is selected (in a coordinate selector 50) by 4 bits, two representing $c_k$ and two representing $a_k = (b_{1k}, b_{2k})$.

All constellations commonly used with the above-cited codes can be decomposed in this way. The principles are similar to those discussed in U.S. Patent 4,597,090 and in Forney et al., "Efficient Modulation..." cited above, where N-dimensional constellations were built up from constituent 2-dimensional constellations; a similar buildup from 2-dimensional constituent constellations was used by Wei in conjunction with trellis codes in his U.S. Patent, cited above.

The general form of encoder for N-dimensional codes is shown in Figure 8. For every N coordinates, p bits 51 enter an encoder 52 and p + r coded bits 54 are produced; these plus q uncoded bits 56 enter a selector 58 which selects a sequence of N coset representatives $c_k$(60); the remaining n-p-q uncoded bits 62 are transformed (in a selector 64) into a sequence of range-identifying parameters $a_k$ (66) which together with the $c_k$ determine (in a signal point selector 68) a sequence of N signal point values $x_k$ (70) by a signal point selection function $f(c_k, a_k)$ which operates on a one-dimensional basis. In general, the range-identifying parameter $a_k$ determines a subset of the real line (one-dimensional constellation) of width (measure) 4 which contains exactly one element congruent to any possible $c_k$ value (modulo 4), and the function $f(c_k, a_k)$ selects that element. For all codes cited, the coset representative alphabet may be taken as four integer-spaced values (modulo 4); for some codes, the coset representative alphabet may be taken as two integer-spaced values (modulo 2) (in which case the ranges are of width 2). The size of the $a_k$ alphabet is as large as necessary to send n bits per N coordinates. The signal point sequences generated by this form of encoder are generally the same as those in the original code, and in particular, are separated by the same minimum squared distance $d^2_{m\ in}$ as the original code.

Coset Precoding

N-dimensional signal point sequences generated by known good trellis codes, when serialized to one-dimensional signal points, cannot in general be used as inputs to the partial response channel of Figure 1 without degradation of $d^2_{m\ in}$ (because of intersymbol interference). However, a technique which we call coset precoding allows the adaptation of these known codes to partial response systems without increase of $S_x$ or degradation of $d^2_{m\ in}$. The general technique is illustrated in Figure 9.

We use the same convolutional encoder 52 as used by the known trellis code, preferably in the form of Figure 8. The p + r coded output bits 54, rather than selecting a subset directly, are converted (as in Figure 8) in a subset selector/serializer 70 into a sequence $c_k$ of N one-dimensional coset representatives $c_1$, ...,$c_N$, corresponding to the subset that would be selected in a non-partial response system. These coset representatives are then 'precoded' (in a precoder 72) into an alternative (or 'precoded') coset representative sequence $c_k'$ (74), where

$$c_k' = c_{k-1}' + c_k \text{ (modulo 4)}$$

(In the cases where it is possible to use modulo 2 coset representatives, this precoding can be done modulo 2.) Thus the precoded coset representative sequence 74 is a running digital sum modulo 4 (or 2) of the ordinary coset representative sequence. More generally, for the generalized partial response channel, the coset representatives are precoded to a sequence

$$c'(D) \equiv c(D)/f(D) \text{ (modulo 4)}$$

in the case of real f(D) (or module $\phi^\mu$ if f(D) is complex, where $\phi = 1 + i$ and $\mu$ is the depth of the sublattice $\Lambda'$ on which the code is based). Precoded coset representatives $c_k'$ can then be grouped N at a time in grouper 75 to specify (in signal point selector/serializer 76) an N-dimensional subset; a signal point can then be selected (based on the uncoded bits 78) in the usual way; and the resulting signal point can be sent out as a sequence x(D) of N one-dimensional signals $x_k$ over the partial response channel (in the same order as they were precoded).

In the 1-D case, if the $c_k$ are half-integers, then the $c_k'$ alternate between two sets of 4 values, one set displaced by 1/2 from the other. This has only a minor effect; we can, for example, "dither" alternating coordinates $x_k$ by +1/4 and -1/4 so as to accommodate this periodicity. Alternatively, we may let the $c_k$ alphabet be integer-valued, eNgN, {0, 1, 2, 3}; then the $c_k'$ are always from the same alphabet, e.g., {±1/2, ±3/2}. These offsets of $c_k'$ or $c_k$ do not affect the $d^2_{m\ in}$ of the code. In the generalized case, the $c_k'$ will usually take on all values in the range from -2 to +2.

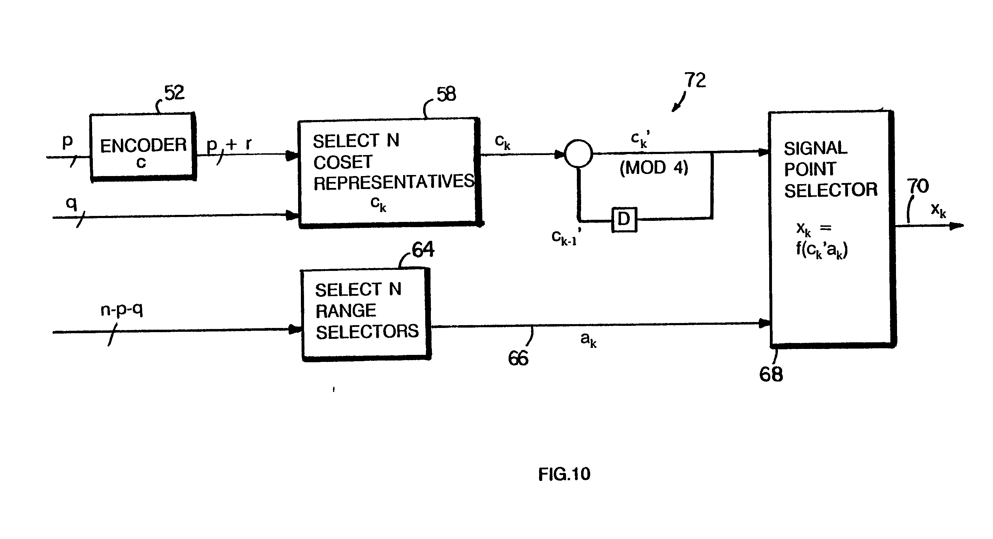

If the encoder is in the form of Figure 8, then Figure 9 can be put in the form of Figure 10, where the same blocks do the same things. In particular, since we have characterized the function $f(c_k, a_k)$ as one that selects the unique element congruent to $c_k$ in a range identified by $a_k$, it does not matter if the precoding changes the $c_k'$ alphabet from the $c_k$ alphabet; indeed, the (modulo 4) in the precoder is unnecessary in principle, though possibly useful in practice.

With either Figure 9 or Figure 10, it can be shown that the PRC sequence $y_k = x_k - x_{k-1}$ (or the generalized PRC sequence) has elements that are congruent to $c_k$ (modulo 4), so they fall in the subsets of the original trellis code, and therefore have at least the same $d^2_{m\ in}$. The RDS sequence $x_k$ has the same average energy $S_x$ as in the original trellis code if the $c_k'$ alphabet is the same as the $c_k$ alphabet; even if not, approximate equality still holds. (In the illustrative embodiment, the average energy per coordinate is 10.25, with integer-spaced signals.) In all cases, the $x_k$ are approximately independent, identically distributed random variables, and thus

    (a) $S_y \cong S_x \|f\|^2$, where $\|f\|^2 = \Sigma_j \geq 0 |f_j|^2$ (e.g., $\|f\|^2 = 2$ for f(D) = 1-D);

    (b) the spectrum of the RDS sequence $\{x_k\}$ is approximately flat (white) within its Nyquist band;

(c) the spectrum of the PRC sequence $\{y_k\}$ is approximately the same as that of the generalized partial response channel.

As other specific examples of precoding for generalized partial response channels, coset precoding can be modified for other kinds of partial response systems as follows. For a $1 + D$ (one-dimensional) partial response system, use the same system except with $c_{k-1}'$ subtracted rather than added in precoder 72, so that $c_k' = c_k - c_{k-1}'$ - (modulo 4). For a $1 - D^L$ system, replace the delay element D by a delay element $D^L$, so that $c_k' = c_{k-L}' + c_k$. For a $1 + D$ two-dimensional system, use two $1 + D$ precoders in parallel, with pairs of outputs from the subset selector/serializer as inputs, and with the two outputs determining the real and imaginary (in-phase and quadrature) parts of the two-dimensional signal point to be transmitted.

## RDS Feedback

Depending on the application, it may be desirable to reduce the average energy $S_y$ of the PRC sequence, at the cost of increasing the average energy $S_x$ of the RDS sequence. This will also tend to flatten the PRC spectrum, while raising the low-frequency content of the RDS spectrum. (For the partial response channel, Justesen, "Information Rates and Power Spectra of Digital Codes", IEEE Trans. Inform. Theory, Vol. IT-28, pp. 457-472, 1982, has introduced the notion of a "cutoff frequency" $f_0$ below which the PRC spectrum is small and above which it tends toward flatness, and has shown that $f_0$ is approximated by $f_0 \simeq (S_y/2S_x)f_N$, where $f_N$ is the Nyquist band edge frequency.)

A general method of performing this tradeoff while maintaining the $d_m^2{}_{in}$ of the trellis code in the generalized PRC sequences is to augment the encoder of Figures 9 or 10 as follows.

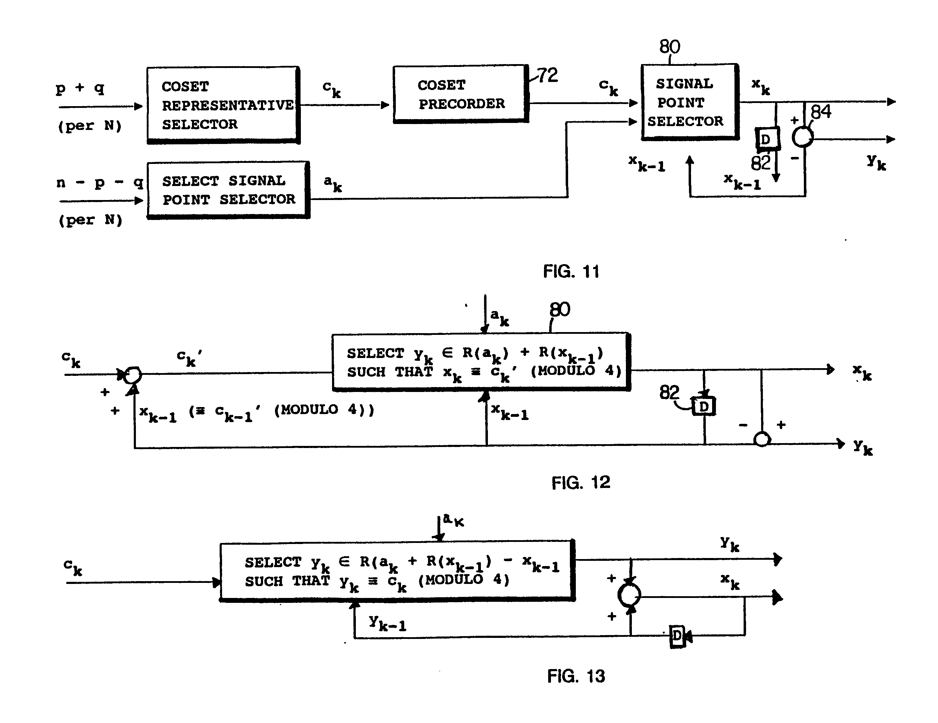

The PRC sequence may be computed from the RDS sequence; for the 1-D channel, each PRC signal is just $y_k = x_k - x_{k-1}$. Referring to Fig. 11, we may let the signal point selector 80 base each $x_k$ on $x_{k-1}$ (by feeding $x_k$ back through a delay element 82) as well as on the current precoded coset representative $c_k'$ and on the range-identifying parameter $a_k$, in such a way that large PRC values $y_k$ - (calculated in summer 84) are avoided. As long as the signals $x_k$ are still chosen to be congruent to the $c_k'$ (modulo 4), the signals $y_k$ will be congruent to the $c_k$ (modulo 4), and therefore will preserve the $d_m^2{}_{in}$ of the trellis code. (Note that although the idea is to precompute the PRC value $y_k$ to keep it small, what is actually fed back is the previous RDS value $x_{k-1}$, so that we call this RDS feedback.)

For the illustrative embodiment, this could work as follows. As already noted, the normal selection function $f(c_k, a_k)$ of selector 80 can be characterized by saying that the 8 inner points are the 8 half-integer values lying in the range from -4 to +4, while the 4 outer points are the 4 half-integer values lying in the range from -6 to -4 and +4 to +6. We can vary the inner point range and outer point range as a function of $x_{k-1}$, as long as the inner point range spans 8 signal points, 2 from each equivalence class, while the outer point range spans 4 signal points, 1 from each equivalence class.

A general way of doing this is to translate all ranges by a translation variable $R(x_{k-1})$ which is a function of $x_{k-1}$. That is, in the illustrative embodiment, the inner point range is modified to be from $-4 + R(x_{k-1})$ to $4 + R(x_{k-1})$, and the outer point range to be from $-6 + R(x_{k-1})$ to $-4 + R(x_{k-1})$ and from $4 + R(x_{k-1})$ to $6 + R(x_{k-1})$.

The function $R(x_{k-1})$ should be generally increasing with $x_{k-1}$ so as to reduce the $y_k$. We have been able to show that in the $f(D) = 1-D$ case the optimum choice is $R(x_{k-1}) = \beta x_{k-1}$, where $\beta$ is a parameter in the range $0 \leq \beta < 1$. When $\beta = 0$, the RDS feedback through element 82 disappears and Figure 11 reduces to coset precoding as in Figure 10. With this choice, if $S_0$ is the value of $S_x$ in the ordinary case ($\beta = 0$), then it is approximately true that

    (a) $S_x = S_0/(1 - \beta^2)$;
    (b) $S_y = 2S_0/(1 + \beta)$;
    (c) The spectrum $S_x(f)$ of the RDS sequence is proportional to $1/(1 - 2\beta\cos\theta + \beta^2)$, where $\theta = \pi f/f_N$;
    (d) The spectrum $S_y(f)$ of the PRC sequence is proportional to $2(1 - \cos\theta)/(1 - 2\beta\cos\theta + \beta^2)$; the "cutoff frequency" $f_0$ is $(1-\beta)f_N$.
    (e) The $x_k$ are limited to the range form $-M/2-(1 + \beta)$ to $M/2(1-\beta)$, and the $y_k$ are limited to the range $-M$ to $M$, if the range of coordinates in the orignal code is from $-M/2$ to $M/2$.

As $\beta$ approaches 1, $S_y$ approaches $S_0$, and $S_y(f)$ approaches a flat spectrum with a sharp null at DC. Meanwhile, $S_x$ becomes large and $S_x(f)$ approaches a $1/(1-D)$ spectrum, except that it remains finite near DC. We have been able to show that this is the best possible tradeoff between $S_x$, $S_y$, and $S_0$ in the 1-D case.

In the foregoing specific example, $R(x_{k-1})$ specifies a fundamental region of a lattice $\Lambda_c' = 4Z$ (i.e., a region containing exactly one point in each coset) based on feedback of a single RDS term $x_{k-1}$, with preferably $R(x_{k-1}) = \beta x_{k-1}$ for some parameter $\beta$. More generally, $R(x^{k-1})$ may specify a fundamental region of a lattice $\Lambda_c' = MZ$ [in the case of real f-(D); or a constituent 2D sublattice $\Lambda_c'$ in the case of complex f(D)] based on a number of previous generalized RDS terms $x^{k-1} = (x_{k-1}, x_{k-2}, ...)$, preferably

a linear combination of such terms.

Figures 12, 13, 14 show three equivalent ways of generating $x_k$ and/or $y_k$ based on $c_k$, $a_k$, and $x_{k-1}$. Figure 12 corresponds most closely to Figure 11.

In Figure 12, the feedback variable $c'_{k-1}$ in coset precoder 72 is replaced by $x_{k-1}$, since $c'_{k-1} \equiv x_{k-1}$ (modulo 4), and only the value of $c'_k$ (modulo 4) is used in selector 80. $R(a_k)$ denotes the range identified by $a_k$, and $R(x_{k-1})$ represents the range translation variable introduced by RDS feedback. Since $y_k = x_k - x_{k-1} \equiv c'_k - x_{k-1}$ (modulo 4) and $c'_k \equiv c_k + x_{k-1}$ (modulo 4), $y_k \equiv c_k$ (modulo 4).

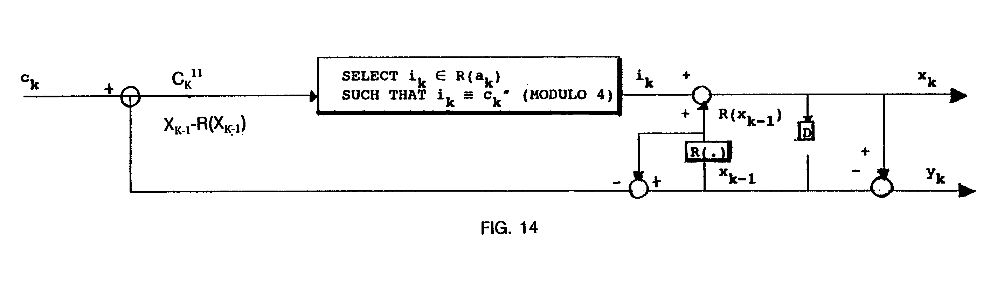

Figures 13 and 14 are mathematically equivalent to Figure 12, in the sense that if they have the same starting value $x_{k-1}$ and the same sequence of inputs ($c_k$, $a_k$), they will produce the same sets of outputs ($x_k$, $y_k$). In Figure 13, $y_k$ is chosen as the unique element congruent to $c_k$ in the range $R(a_k) + R(x_{k-1}) - x_{k-1}$, and $x_k$ is determined from $y_k$ as $x_k = y_k + x_{k-1}$, so $x_k \equiv c'_k \equiv c_k + x_{k-1}$ (modulo 4), and is the unique element in the range $R(a_k) + R(x_{k-1})$ congruent to $c'_k$ (modulo 4). In Figure 14, an innovations variable $i_k$ is chosen as the unique element congruent to $c''_k \equiv C_k + x_{k-1} - R(x_{k-1})$ (modulo 4) in the range $R(a_k)$, and $x_k$ is determined from $i_k$ as $x_k = i_k + R(x_{k-1})$, so $x_k \equiv c''_k + R(x_{k-1}) \equiv c'_k$ (modulo 4), and is the unique element in the range $R(a_k) + R(x_{k-1})$ congruent to $c'_k$ (modulo 4). Figure 12 combines the delay element in the precoder with the delay element necessary for RDS feedback, and is most useful if $x_k$ is the desired output and the $c'_k$ are always from the same alphabet, e.g. $\{\pm 1/2, \pm 3/2\}$. Figure 13 eliminates the precoder altogether, and is most useful if $y_k$ is the desired output and the $c_k$ are always from the same alphabet, e.g. $\{\pm 1/2, \pm 3/2\}$. Figure 14 takes the range translation variable $R(x_{k-1})$ outside of the selector, so that the $i_k$ are always chosen from the same range (the union of all $R(a_k)$); the innovations sequence $i(D)$ is approximately a sequence of independent identically distributed random variables $i_k$ (ignoring the minor variations induced by the $c'_k$ congruence constraint) and this auxiliary sequence can be useful if a white (spectrally flat) sequence deterministically related to $x(D)$ or $y(D)$ is desired.

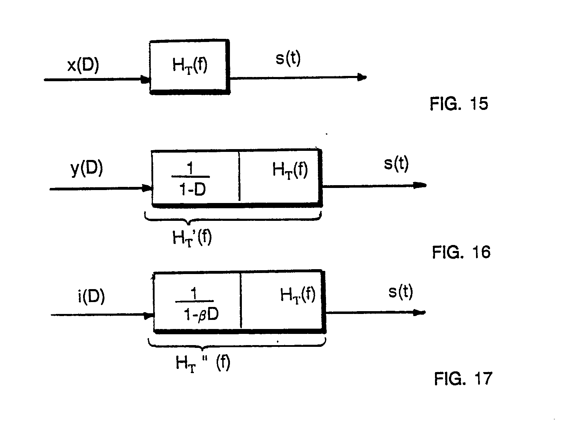

Figures 15, 16, 17 illustrate three equivalent filtering arrangements for use with the $x(D)$, $y(D)$, and $i(D)$ sequences of Figures 12, 13, 14. In Figure 15, the RDS sequence $x(D)$ is filtered in a transmit filter $H_T(f)$ before being transmitted (as signal $s(t)$) over the actual channel (not shown). In Figure 16, the PRC sequence $y(D)$ is filtered in a transmit filter $H'_T(f)$ whose response is equivalent to that of a cascade of a $1/(1-D)$ sampled-data filter and $H_T(f)$; since $y(D)$ has a DC null, it does not matter that the response of $1/(1-D)$ is infinite at DC (particularly if $H_T(f)$ also has a DC null). In Figure 17, the innovations sequence $i(D)$ is filtered in a transmit filter $H''_T(f)$ whose response is equivalent to that of a cascade of a $1/(1-\beta D)$ sampled-data filter and $H_T(f)$; this is equivalent to Figures 15, 16 if $R(x_{k-1}) = \beta x_{k-1}$; otherwise, the equivalent sampled-data filter is the filter corresponding to $x_k = i_k + R(x_{k-1})$, in general nonlinear. Any one of these equivalent forms may be preferable depending on $H_T(f)$, $R(x_{k-1})$, and the implementation technology being used.

Certain modifications of the above RDS feedback systems may be desirable in practice. For example, it may be desirable to change the form of the ranges $R(a_k)$ from those used when $R(x_{k-1}) = 0$. For example, in the illustrative embodiment, a simply implemented form of RDS feedback is as follows: when $x_{k-1}$ is positive, let $y_k$ be chosen as usual in the range from -4 to 4 if $a_k$ indicates an inner point, but if $a_k$ indicates an outer point, let $y_k$ be the number congruent to $c_k$ in the range from -4 to -8; when $x_{k-1}$ is negative, use the range from 4 to 8 for outer points. Then

(a) the range of the PRC sequence $y_k$ is limited to -7 1/2 to +7 1/2, rather than -11 to 11 when there is no RDS feedback;

(b) the PRC variance $S_y$ is reduced to 13.25 from 20.5, a reduction of 1.9 dB, and about 1.1 dB above $S_0 = 10.25$;

(c) the mean of $y_k$ is -3/2 if $x_{k-1}$ is positive, and +3/2 if $x_{k-1}$ is negative, so that the RDS sequence tends to remain in the neighborhood of zero. While it is difficult to compute $S_x$ exactly, it follows from the facts that $E[y_k x_{k-1}] = S_y/2$ and $E[y_k x_{k-1}] = -(3/2) E[|x_{k-1}|]$ that the mean of the absolute value of $x_k$ is $S_y/3 = 4.42$, so that the RDS sequence $x_k$ is fairly well bounded. (With no RDS feedback, the mean of the absolute value of $x_k$ is 2.75);

(d) the variance of the $y_k$, given $x_{k-1}$, is $S_0 = 11$, about 0.3 dB higher than the $S_0 = 10.25$ possible with no RDS feedback. The minimum possible $S_x$ for $S_y = 13.25$, $S_0 = 11$, is $S_x \simeq 19.5$, corresponding to $\beta \simeq 0.66$. Since $S_x = S_{|x|} + E[|x|]^2$, $S_x$ must be greater than $(4.42)^2 \simeq 19.5$, so with this simple method we achieve less than the optimal spectral tradeoff;

(e) every possible $y_k$ is associated with a unique pair ($c_k$, $a_k$). As we shall discuss in more detail below, this means that a decoder need not keep track of an estimated running digital sum of the estimated PRC sequence, and that there will be no error propagation in the decoder.

In summary, this simple method does not achieve the best power tradeoff between $S_x$ and $S_y$, but does effectively limit not only $S_y$ but also the peak values of $y_k$, keeps the RDS sequence $x_k$ fairly well bounded, and avoids error propagation at the receiver.

Thus these methods allow for trading off of $S_x$

versus $S_y$ (i) from the unconstrained case, where the $x_k$ sequence is uncorrelated, $S_x$ has the same energy $S_0$ as is necessary to send n bits per symbol in the non-partial-response case, and $S_y = 2S_x$, (ii) almost to the case where the $y_k$ sequence is uncorrelated, $S_y = S_0$, and $S_x$ becomes very large. These tradeoffs are possible for all trellis and lattice codes cited.

## Decoding

The above methods succeed in generating PRC sequences that belong to a known good code, and therefore have a $d_{m\ in}^2$ at least as great as that of the code.

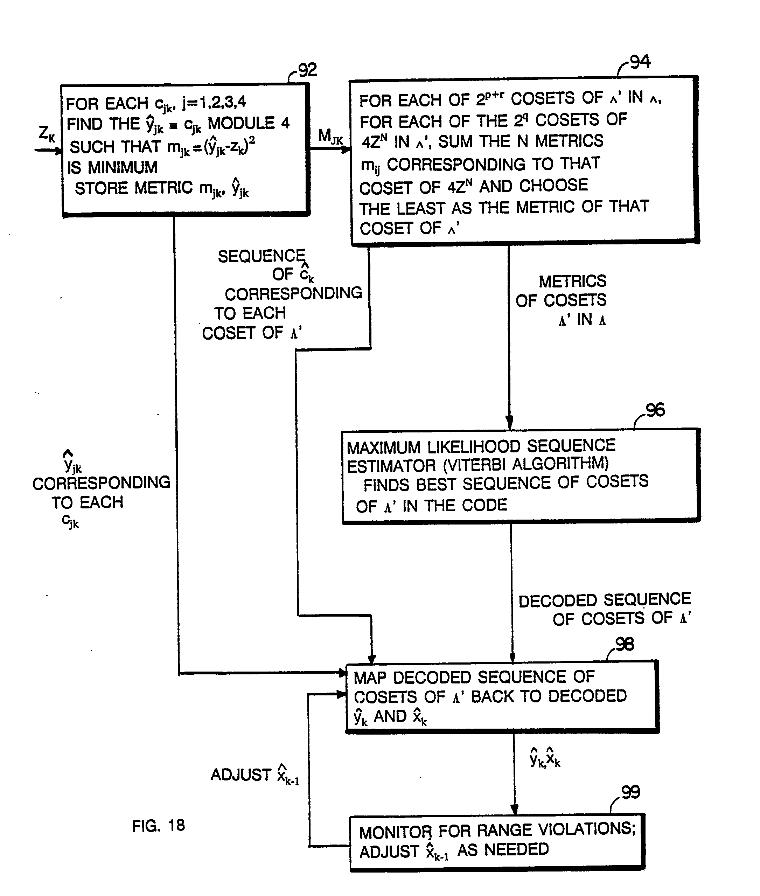

Referring to Fig. 18, a suitable detector for the noise received PRC sequence $z(D) = y(D) + n(D)$ is therefore a maximum likelihood sequence estimator (Viterbi algorithm) for the known good code, adapted as follows:

(a) A first step of decoding may be, for each noisy received PRC value $z_k = y_k + n_k$, for each of the four classes of real numbers congruent to the four one-dimensional coset representatives $c_{jk}$ - (modulo 4), j = 1,2,3,4, find (block 92) the closest element $y_{jk}$ in each class to $z_k$, and its 'metric' $m_{jk} = (y_{jk} - z_k)^2$ (squared distance from $z_k$);

(b) In a code based on an N-dimensional lattice partition $\Lambda/\Lambda'$, a second step of decoding may be, for each of the $2^{p+r}$ cosets of $\Lambda'$ in $\Lambda$, to find the best (lowest metric) of the $2^q$ cosets of $4Z^N$ whose union is that coset of $\Lambda'$, by summing the respective metrics of the constituent one-dimensional metrics $m_{jk}$ and comparing these sums (block 94);

(c) Decoding can then proceed in the usual manner (block 96), using as a metric for each coset of $\Lambda'$ the best metric determined in step (b). The decoder will ultimately produce an estimate of the sequence of cosets of $\Lambda'$, which can be mapped to a sequence of estimated coset representatives $c_k$, which can be mapped to the corresponding $y_k$, from which the original $a_k$ and $x_k$ can be recovered if desired (block 98). These last steps require that the decoder keep track of the running digital sum $x_{k-1}$ of the estimates $y_k$.

Since the PRC sequences are in the known code, the error probability of this decoder will be at least as good as that of the known code, in the sense of achieving at least the same effective $d_{m\ in}^2$. However, because the PRC sequences are actually only a subset of the known code sequences, such a decoder is not a true maximum likelihood sequence estimator for the PRC sequences. As a result, it may occasionally decode to a sequence which is not a legitimate PRC sequence. For a 1-D response, legitimate PRC sequences must satisfy the two following additional conditions:

(a) A legitimate finite PRC sequence y(D) must be divisible by 1-D; i.e., the sum of its coordinates must be zero;

(b) the range constraints imposed by the signal point selector must be satisfied for all $y_k$ (or equivalently $x_k$ or $i_k$), based on the reconstructed values of the RDS $x_{k-1}$.

If this decoder makes a normal decoding error, corresponding to a short period of wrong coset estimates followed by correct coset estimates, it is possible that the corresponding finite PRC error sequence will have a running digital sum other than zero. This will cause a persistent error in the decoder's estimated running digital sum $x_{k-1}$, which may lead to occasional mapping errors back to the $y_k$, $a_k$, and ultimately $x_k$, even though the cosets $c_k$ are correct, for as long as the error in the RDS estimate persists.

The decoder must therefore continually monitor (block 99) whether the range constraints in the reconstructed $y_k$ and $x_k$ are satisfied. If they are not, then it knows that its estimated RDS $x_{k-1}$ is incorrect; it should adjust $x_{k-1}$ by the minimum amount necessary for the range constraint to be satisfied, assuming that the coset sequence $c_k$ is correct. With probability 1, this will eventually result in resynchronization of the estimated RDS to the correct value, and normal decoding can resume. However, there may be a considerable period of error propagation.

Note that in the case of generalized f(D), range violations may not occur in the same way.

## Avoidance of Error Propagation

We now give a general method of avoiding error propagation at the receiver. The method works best when the signal constellation consists of all points in $\Lambda$ within an N-cube, but is not restricted to that case. It may be regarded as a generalization of the principles of earlier forms of precoding (modulo M) for use with coded sequences.

The basic idea is that each possible PRC value $y_k$ should correspond to a unique $(c_k, a_k)$ value, when the code can be formulated in one-dimensional form as in Figure 7; or, more generally, that each group of N $y_k$ values should correspond not only to a unique sequence of N $c_k$ values but also to a unique set of uncoded bits, if a general N-dimensional signal point selector is used as in Figure 6. Then the inverse map from decoded $y_k$ to coded and uncoded bits is independent of the decoder's estimate of the running digital sum, so that

(a) the decoder need not keep track of the RDS;

(b) error propagation does not occur. Thus in Figure 18, block 99 can be eliminated.

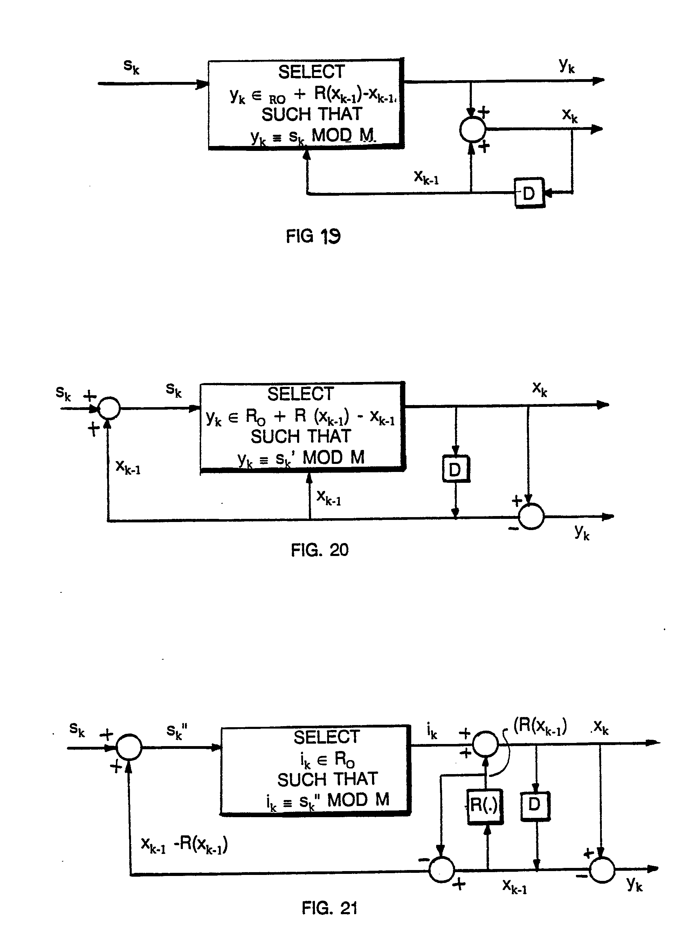

Figure 19 shows how this may be done where the code can be formulated in one-dimensional form, as in the illustrative embodiment. From $c_k$ and $a_k$, a signal point selector selects a value $s_k = f(c_k, a_k)$ as in Figure 8. In the illustrative embodiment, $s_k$ takes on one of 12 values, namely, the half-integral values in the range from -6 to 6. In general, $s_k$ will take on one of the values from an integer-spaced alphabet in a range of width M; we denote this range by $R_0$. Then, as in Figure 13, $y_k$ is selected as the unique number congruent to $s_k$ (modulo M) in the range $R_0 + R(x_{k-1}) - x_{k-1}$ of width M, where $R(x_{k-1})$ is an feedback translation variable, and $x_{k-1}$ is the previous RDS signal point. The current RDS $x_k$ is computed as $y_k + x_{k-1}$.

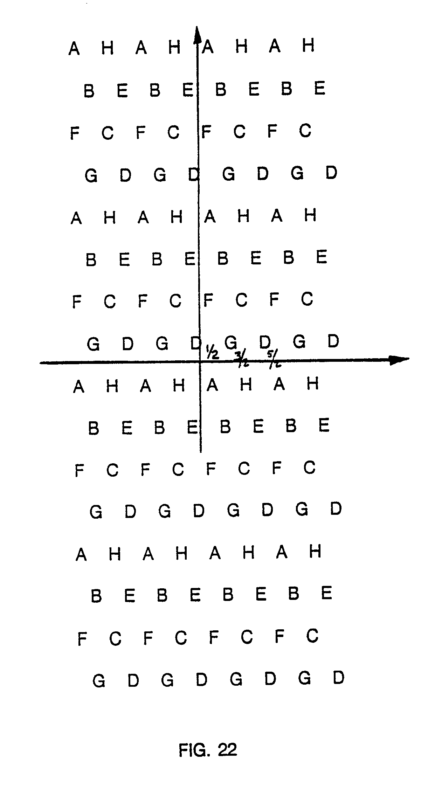

Figures 20 and 21 are equivalent methods of generating $x_k$ and/or $y_k$ from the sequence $s_k$ such that $y_k \equiv s_k$ (modulo M), analogous to Figures 12 and 14. In Figure 21, an innovations variable $i_k$ is generated which is more or less white and uniformly distributed over the range $R_0$, so that its variance $S_0$ is approximately $M^2/12$; thus $S_0 \simeq 12$ for the illustrative embodiment, a penalty of about 0.7 dB over the value of $S_0 = 10.25$ achievable with no RDS feedback. As in Figures 12, 13, 14, all three sequences $x_k$, $y_k$, and $i_k$ carry the same information, and as in Figures 15, 16, 17, any can be used as the input to a filter which shapes the spectrum for transmission.

The penalty in the innovations variance is eliminated if the original code coordinates are uniformly distributed over a range $R_0$; i.e., if the original constellation is bounded by an N-cube with side $R_0$.

Thus, the example illustrates an alternative to coset precoding in which
$s'(D) \equiv s(D)/(1-D) \bmod M,$
where s(D) is the coded information sequence in one-dimensional form, and the constituent 1D sublattice is regarded as $\Lambda_c' = MZ$. More generally $s'-(D) \equiv s(D)/f(D) \bmod M$ (in the real case; or modulo a constituent 2D sublattice $\Lambda_c'$ in the complex case).

As an illustrative embodiment with a square constellation, we use the same two-dimensional 8-state Ungerboeck encoder as in Figure 2, except with the 128-point constellation of Figure 22 rather than that of Figure 3. The constellation consists of alternate points from the conventional 256-point 16 x 16 constellation; thus the coordinates have the 16 half-integral values { ± 1/2, ± 3/2, ... , ± 15/2}, but with the restriction that the sum of the two coordinates must be an even integer (0, modulo 2). The minimum squared distance between signal points is thus 2, rather than 1; and the $d_{m\ in}^2$ of the code is 10, rather than 5. The variance of each coordinate is now 21.25 rather than 10.25, which after scaling by 2 is a loss of 0.156 dB relative to the Figure 3 constellation, since the cross is more like a circle than is the square. (In lattice terminology, we are now using the 8-way lattice partition $RZ^2/4Z^2$ rather than $Z^2/2RZ^2$).

It will be observed that now each of the eight subsets corresponds to a unique pair of coset representatives $(c_1, c_2)$ modulo 4, such that $c_1 + c_2 = 0$ (modulo 2). Therefore, the three coded bits of Figure 2 determine a pair of coset representatives directly in subset selector 24, rather than with the aid of an uncoded bit as in Figure 4. The four uncoded bits then select one of the 16 points in the selected subset. In this case, the uncoded bits may simply be taken two at a time to determine one of the four ranges -8 to -4, -4 to 0, 0 to 4, or 4 to 8. This is conveniently expressed by letting the two-bit range identifying parameters $(a_1, a_2)$ each represent one of the four values $\{\pm 2, \pm 6\}$; then the coordinate selection function is simply $s_k = f(c_k, a_k) = c_k + a_k$. Note that the possible values for $s_k$ are the 16 half-integral values in the range $R_0$ from -8 to 8, of width M = 16.

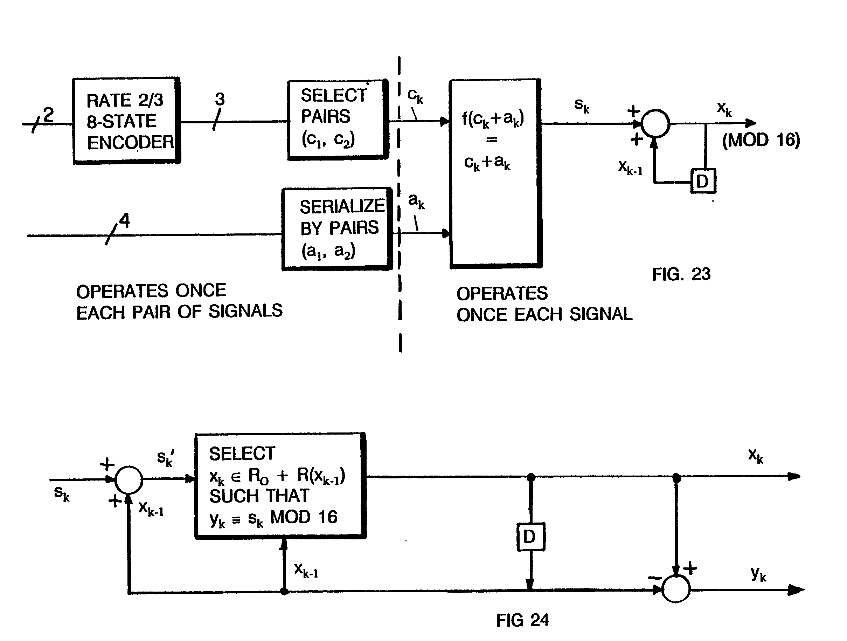

Conventional precoding may then be done modulo 16. The entire encoder is illustrated in Figure 23. The RDS value $x_k$ is the sum $s_k + x_{k-1}$ (modulo 16). In this case the $x_k$ values are essentially independent identically distributed (white) random variables, and $y_k = x_k - x_{k-1} \equiv s_k$ (modulo 16).

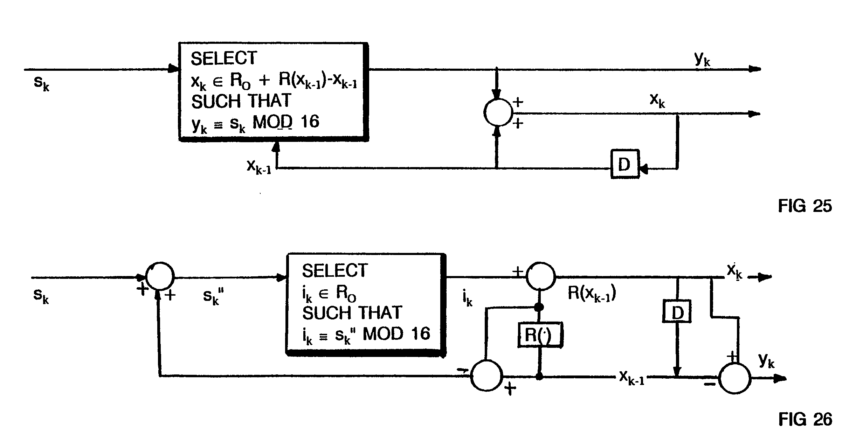

To obtain spectral tradeoffs via RDS feedback as in Figures 12, 13, 14, let $s_k$ continue to represent the desired congruence class of $y_k$ (modulo 16), and let $R(x_{k-1})$ be an RDS feedback variable as in Figures 12, 13, 14, ideally equal to $\beta x_{k-1}$ in the 1-D case. Then Figures 24, 25, 26 show three equivalent methods of obtaining sequences $x_k$ and/or $\dot{y}_k = x_k - x_{k-1}$ such that $y_k \equiv s_k$ (modulo 16) and $S_x$ and $S_y$ have the desired tradeoff, given $S_0 = 21.25$. Here $R_0$ is the range from -8 to 8.

In this case the innovations variable $i_k$ has variance $S_0 \simeq 16^2/12 = 21.33$, essentially the same as the variance of each coordinate in Figure 22, so that there is no penalty beyond the 0.16 dB involved in using Fig. 22 rather than Fig. 3.

As already noted, the decoder need not keep track of the RDS, because, given the estimated PRC sequence $y_k$, the $c_k$, $a_k$, and ultimately the original input bit sequence are uniquely determined. However, if the decoder does keep track of the estimated RDS and the corresponding ranges that the $y_k$ should fall into, it can detect that an error has occurred whenever the decoded $y_k$ falls outside the estimated range. Even if not used for error correction, such range violation monitoring can yield an estimate of decoder error rate.

## Augmented Decoders

A true maximum likelihood sequence estimator would take into account the entire state of the encoder and channel, which in the 1-D case will include the value of the RDS $x_{k-1}$ (the channel state) as well as the state of the encoder C. Such a decoder would achieve the true $d_{m\ in}^2$ of the PRC sequences, and would be free of error propagation. However, because $x_{k-1}$ in general takes on a large number of values, in principle possibly an infinite number with RDS feedback, such a decoder may not be practical. In addition, to achieve the true $d_m^2$ $_{in}$ may require an essentially infinite decoding delay because the code/channel combination becomes quasi-catastrophic when n is large, as we shall explain more fully below.

It may be worth considering augmenting the decoder to at least achieve the true $d_{m\ in}^2$ of the code, however. In the 1-D case, because all finite PRC sequences are divisible by 1-D, all finite-weight error sequences must have even weight. Thus, the true $d_{m\ in}^2$ is always even. In the illustrative embodiment, the true $d_{m\ in}^2$ is actually 6, not 5.

A general method for achieving the true $d_{m\ in}^2$ in such cases while only doubling the effective number of states in the decoder is as follows. Let the decoder split each state of the encoder C into two, one corresponding to an even RDS and one to an odd. During decoding, two sequences then merge into the same state only if their estimated RDS has the same value (modulo 2). Thus, it becomes impossible for two sequences differing by an odd-weight error sequence to merge, so that the effective $d_{m\ in}^2$ is the weight of the minimum even-weight error sequence in the original code. Further, if there is a decoding error that results in a persistent estimated RDS error, as discussed above, that error must be at least 2, so it will tend to be detected sooner.

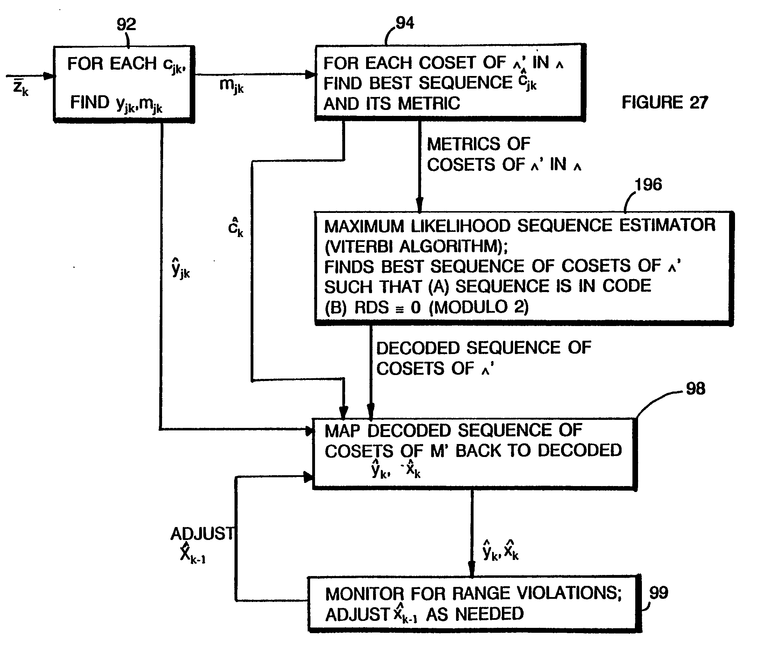

The decoder of Figure 18 can be used, modified only as shown in Figure 27. For most codes, each of the subsets of the signal constellation (cosets of $\Lambda'$ in $\Lambda$) will contain points all of which have a sum of coordinates which is either even or odd. For example, in Figure 3, four of the eight subsets contain points whose coordinate sum is 0 (modulo 2), and 4 contain points whose coordinate sum is 1 (modulo 2). Thus the metric of each subset (coset of $\Lambda'$ in $\Lambda$) can be determined as before in blocks 92 and 94; the maximum likelihood sequence estimator 196 is then modified to find the best sequence of cosets that (a) is in the code, and (b) has a running digital sum congruent to zero (modulo 2). The decoded coset sequence is mapped back to $y_k$ and $x_k$ in block 98 as before, with adjustment of $x_{k-1}$ by block 99 if necessary (adjustments will now be by multiples of 2).

There is a drawback to this technique, however, in addition to the doubling of the decoder state space. Two sequences may differ by an odd-weight error sequence followed by a long string of zeros (no differences). The decoder may then follow parallel pairs of states in the decoder trellis for a very long time, without resolving the ambiguity. This 'quasi-catastrophic' behavior can ultimately be resolved by the maximum likelihood sequence estimator only by a range violation due to the differing RDS parity on the two paths. Thus, the decoding delay required to achieve the true $d_{m\ in}^2$ may be very large.

For this reason. it will generally be preferable simply to chose an encoder C with twice the number of states, and use an unaugmented decoder for C. For example, there is a 16-state 2-dimensional Ungerboeck code with $d_{m\ in}^2 = 6$; even though it may have a somewhat larger error coefficient than the 8-state code with an augmented 16-state decoder, we believe that in practice it will be preferable.

It may be worth mentioning that PRC sequences drawn from the 4-state two-dimensional Ungerboeck code also have a true $d_{m\ in}^2$ of 6, since that code has $d_{m\ in}^2 = 4$, with the only weight-4 error sequences being single coordinate errors of magnitude 2, which are also not divisible by 1-D. A 16-state decoder which keeps track of the RDS modulo 4 can achieve this $d_{m\ in}^2$. However, in this case not only is the code quasi-catastrophic, but also the error coefficient is large, so again it would seem that the ordinary 16-state 2D Ungerboeck code would be preferable.

Note that the foregoing example is specific to the case f(D) = 1-D.

## Quadrature Systems

As mentioned earlier, a complex (or quadrature) partial response system (QPRS) may be modeled as a 1 + D sampled-data filter operating on a complex-valued RDS sequence x(D) to produce a complex-valued PRC sequence $\overline{y(D)} = (1 + D) x\text{-}(D)$; i.e., $\underline{y}_k = \underline{x}_k + \underline{x}_{k-1}$. When used with double-sideband quadrature amplitude modulation over a bandpass channel, such a system results in nulls at both band edges, $f_c \pm f_N$ where $f_c$ is the carrier frequency and $f_N = 1/2T$ is the width of a single Nyquist band.

When N is even and $4Z^N$ is a sublattice of $\Lambda'$, as is the case with all good codes previously mentioned, then we can adapt a known good code for use in a QPRS system by using essentially the same principles as before. A coset of $4Z^N$ can be specified by N/2 complex-valued coset representatives $c_k$, where coset representatives take on one of 16 possible values, corresponding to 4 integer-spaced values (modulo 4) for the real and imaginary parts of $c_k$, respectively. The general picture of Figure 8 then holds, except that coset selector 58 and range-identifying parameter selector 64 select N/2 complex-valued coset representatives $c_k$ and range-identifying parameters $a_k$, and the signal point selector operates once per quadrature signal and puts out complex-valued signals $x_k$. Coset precoding as in Figure 9 is done by forming the complex-valued precoded coset $c'_k \equiv c_k - c'_{k-1}$ - (modulo 4) once per quadrature symbol. RDS feedback as in Figures 11, 12, 13 is done by using a function $R(a_k)$ that identifies a region of complex space of area 16 that contains exactly one element from any coset of $4Z^2$, and a complex-valued translation variable $R(x_{k-1})$, ideally equal to $\beta x_{k-1}$. In the cases where $2Z^2$ or $2RZ^2$ is a sublattice of $\Lambda'$, precoding can be done modulo 2 or 2 + 2i, respectively, and $R(a_k)$ can identify a region of area 4 or 8 containing exactly one element from any coset of $2Z^2$ or $2RZ^2$, respectively.

## Higher-Dimensional Systems

We have shown embodiments in which coordinates of N-dimensional symbols are formed on a signal-by-signal (one or two-dimensional) basis, with signal-by-signal feedback of the previous RDS value $x_{k-1}$. Similar kinds of performance can be obtained by systems which select signals on a higher-dimensional basis. In such systems, the precoded cocet representatives must be grouped as in Figure 9 so as to select subsets in the appropriate dimension, signal points then selected in that dimension, and the coordinates then serialized again for transmission over the channel. If the order of cosets is maintained, then such a system retains the property that the PRC sequences are from the given code and have the specified $d^2_m$ in. In such a system it may be more natural to do (RDS) feedback on a higher-dimensional basis rather than on each signal.

## N-Dimensional Codes

Although representation of codes in one-dimensional form is desirable, it is not essential. In this section we show how codes may be generated directly in N dimensions. In certain forms, the N-dimensional code is entirely equivalent to its one-dimensional counterpart. In other forms, simplified embodiments may be obtained.

Again, we shall use for illustration the 8-state 2-dimensional Ungerboeck-type code of Figure 2, with the 2-dimensional 128-point constellation of Figure 3. In this constellation, recall that each coordinate takes on values from the alphabet of the 12 half-integral values in the range from -6 to 6; the two-dimensional constellation uses 128 of the 144 possible pairwise combinations of elements of this alphabet.

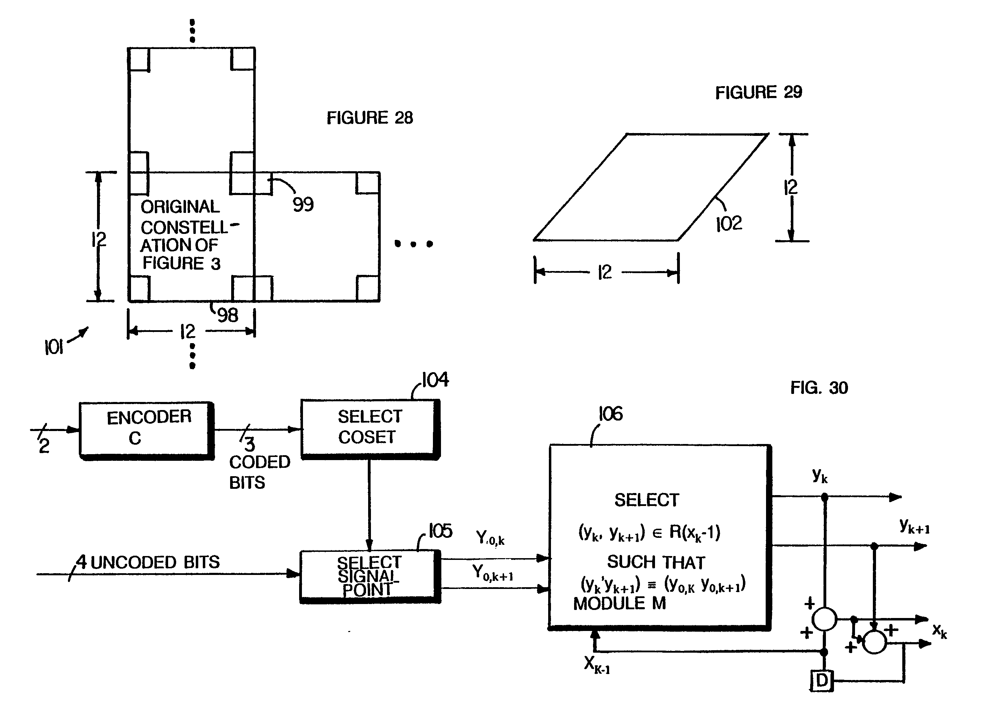

As a first step, we expand the signal constellation to an infinite number of values, as follows. Let the expanded constellation consist of all pairs of numbers that are congruent to some point in the original (Figure 3) constellation (modulo 12). Thus the points in the expanded constellation consist of pairs of half-integral values. If we regard the original constellation as a cell bounded by a 12 x 12 square 98, then the expanded constellation consists of the infinite repetition of this cell throughout 2-space, as indicated diagrammatically in Figure 28. Note that each cell contains only 128 of the 144 possible points; there are 4 x 4 'holes' 99 in the expanded constellation.

The key property of this expanded constellation 101 is that if we place a 12 x 12 square anywhere in the plane (with sides oriented horizontally and vertically), the square will enclose exactly 128 points, one congruent to each of the points in the original constellation. An even more general statement is true: if we place a rhombus 102 with horizontal width 12 and vertical height 12 (see Figure 29) anywhere in the plane, it too will enclose 128 points, one congruent to each point in the original constellation.

Referring to Figure 30, we may now implement RDS feedback on a two-dimensional basis as follows. Let $x_{k-1}$ represent the running digital sum of all $y_k$ previous to the current (two-dimensional) symbol. Let $R(x_{k-1})$ now denote a region of the plane corresponding to a 12 x 12 rhombus as in Figure 29, with both the shape and the location of the rhombus possibly depending on $x_{k-1}$. Let $(y_{0,k}, y_{0,k+1})$ denote the point in the original constellation that would be selected (in selectors 104, 105) by the three coded bits and four uncoded bits according to the unconstrained code (Figure 2). Then (in selector 106) select $(y_k, y_{k+1})$ as the unique point in the two-dimensional expanded constellation that lies within the region $R(x_{k-1})$ and is congruent to $(y_{0,k}, y_{0,k+1})$ (modulo 12); these will be the two coordinates $y_k$. We can obtain $(x_k, x_{k+1})$ from $x_k = y_k + x_{k-1}$, $x_{k+1} = y_{k+1} + x_k$ as shown.

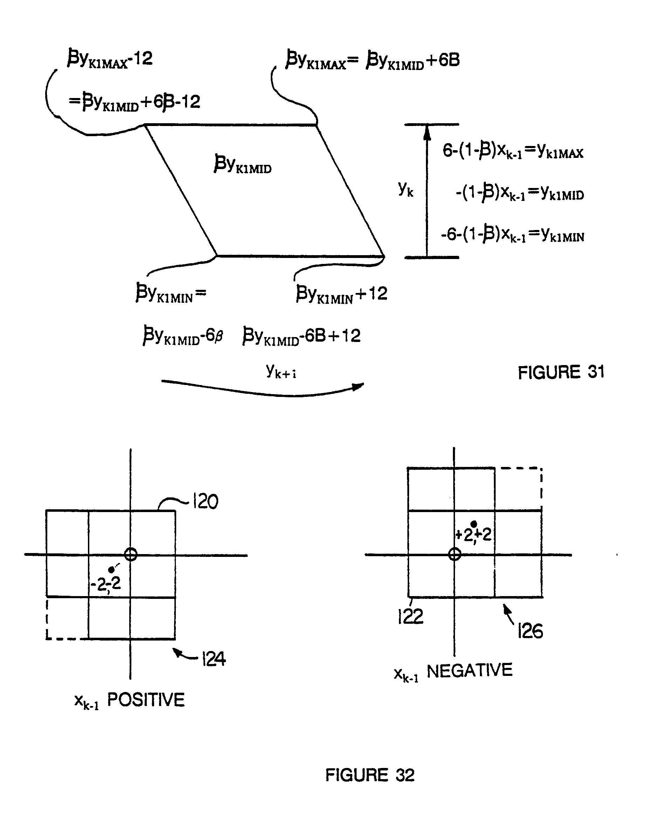

We now show that this two-dimensional system can produce the same outputs as the one-dimensional RDS feedback system (modulo 12) shown earlier, with the optimal one-dimensional RDS feedback variable $R(x_{k-1}) - \beta x_{k-1}$. Referring to Figure 31, in one dimension, given $x_{k-1}$, $y_k$ is chosen as the unique value in the range $R_0 + \beta x_{k-1} - x_{k-1}$ congruent to $s_k$ (modulo 12), where we now recognize that $s_k$ is congruent to $y_{o,k}$. Hence, one coordinate of the rhombus used in the two-dimensional system can be taken to lie in the same width-12 range. Then, given $x_{k-1}$ and $y_k$, and thus also $x_k = y_k + x_{k-1}$, $y_{k+1}$ is chosen as the unique value in the range $R_0 - (1-\beta)x_k = R_0 - (1-\beta)y_k - (1-\beta)x_{k-1}$ that is congruent to $s_{k+1} = y_{0,k+1}$ (modulo 12). Thus, $y_{k+1}$ lies in the range $R_0 - (1-\beta)x_{k-1}$ (same as $y_k$), shifted by $-(1-\beta)y_k$.

Thus, by proper choice of rhombus, we can emulate the performance of a one-dimensional (modulo 12) RDS feedback system with a two-dimensional system. It will thus have the same advantages, including avoidance of error propagation and near-optimal tradeoff between $S_x$, $S_y$ and $S_0$, and the same disadvantages, notably the increase in $S_0$ to 12 over the 10.25 otherwise possible.

We can choose other two-dimensional RDS feedback variables (regions) to further simplify implementation, and achieve other advantages, at the cost of suboptimal power tradeoffs. For example, a system almost identical to the simplified one-dimensional system described earlier results if we let $R(x_{k-1})$ be the square 120 of side 12 centered at (-2, -2) when $x_{k-1}$ is positive, and the square 122 centered at (+2, +2) when $x_{k-1}$ is negative. Thus we use one of tho two constellations 124, 126 shown schematically in Figure 32.

As in the previous one-dimensional system, inner points are always chosen from the same set regardless of $x_{k-1}$, but outer points are varied so as to bias $y_k$ in a positive or negative direction. The ranges of the $y_k$ are strictly limited from -7 1/2 to 7 1/2. In fact, this system is identical to the earlier simplified system, except that $y_{k+1}$ is chosen on the basis of $x_{k-1}$, rather than $x_k$. In practice, all the measures of performance and spectrum will be very similar.

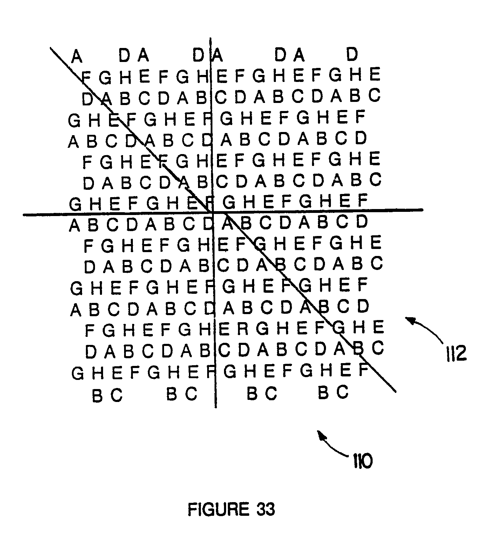

Another variant yields a system akin to that of the Calderbank, Lee, and Mazo type. A CLM-type system uses an expanded signal constellation with twice the ordinary number of signal points, divided into two disjoint constellations, one to be used when $x_{k-1}$ is positive, and the other when $x_{k-1}$ is negative. Figure 33, for example, shows a 16 x 16 square constellation divided into two disjoint constellations 110, 112 of 128 points each, such that each such constellation divides evenly into 8 subsets of 16 points each. One constellation consists of points the sum of whose coordinates is positive or zero and is used when $x_{k-1}$ is negative; the other consists of points whose coordinate sums are negative or zero and is used when $x_{k-1}$ is positive. In two dimensions, doubling the constellation size doubles $S_y$, and thus does not yield a favorable power tradeoff; however, in higher dimensions the penalty due to the use of two disjoint constellations is less.

These ideas can be generalized to N dimensions, as follows. If there is a one-dimensional formulation of the code as in Figure 8, using modulus M, then an N-cube of side M completely surrounds the N-dimensional constellation, and the resulting cell can be replicated to cover N-space without compromising the minimum squared distance between code sequences that are congruent to original code sequences modulo M. Then we may use an N-dimensional RDS feedback function $R(x_{k-1})$, where for all $x_{k-1}$, $R(x_{k-1})$ is a region of N-space of volume $M^N$ that contains exactly one point in each equivalence class of N-vectors modulo M, in an N-dimensional analogue of Figure 30.

## Claims

1. Apparatus for generating a sequence of digital signals $x_k$ and/or a sequence of digital signals $y_k$, $k = 1, 2, \ldots$, such that the relationship between the $x_k$ signals and $y_k$ signals is $y_k = \Sigma_j \geq 0 f_k x_{k-j}$, said signals $y_k$ being a sequence in a given modulation code; said apparatus being characterised in that it comprises an encoder adapted for operatively selecting J said signals $y_k$, $J \geq 1$, ($y_k$, $y_{k+1}$, ... $y_{k+J-1}$) to be congruent to a sequence of J coset representatives $c_k$ (modulo M), M being an integer, and said coset representatives being specified in accordance with said given modulation code; in that said encoder is adapted to choose said J symbols from one of a plurality of J-dimensional constellations, said choice being based on at least a previous $x_{k'}$, $k' < k$, and at least one of said constellations comprising both a point with a positive sum of coordinates and another point with a negative sum of coordinates; and in that said encoder is operatively arranged so that said signals $x_k$ have finite variance $S_x$.

2. Apparatus according to Claim 1, further characterised in that J is 1.

3. Apparatus according to Claims 1 or 2, further characterised in that J is the same as the number N of dimensions in said modulation.

4. Apparatus according to any preceding claim, further characterised in that there are a finite set of said J-dimensional constellations, preferably two said J-dimensional constellations.

5. Apparatus according to any preceding claim, further characterised in that at least two (or both) said J-dimensional constellations are not disjoint.

6. Apparatus for generating a sequence of digital signals $x_k$ and/or a sequence of digital signals $y_k$, $k = 1, 2, \ldots$, such that the relationship between

the $x_k$ signals and $y_k$ signals is $y_k = x_k + \Sigma_j \geq 1 f_k x_{k-j}$, said signals $y_k$ being a sequence in a given modulation code; said apparatus being characterised in that it comprises an encoder adapted for operatively selecting said signals $x_k$ to be congruent to a sequence of alternative coset representatives $c_k'$ (modulo M), where

$c_k' = c_k - \Sigma_{j \geq 1} f_j c_{k-j}$ (modulo M), in the case when $f_j$ is real, or

$c_k' = c_k - \Sigma_{j \geq 1} f_j c_{k-j}$ (modulo $\Lambda_c'$)

in general, and where the $c_k$ sequence is a coset representative sequence specified in accordance with said modulation code.

7. Apparatus according to any preceding claim, further characterised in that M is 2 or 4.

8. Apparatus according to any of Claims 1 to 6, further characterised in that M is a multiple of 4.

9. Apparatus according to any of Claims 1 to 6, further characterised in that M is $2+2i$.

10. Apparatus for generating a sequence of digital signals $x_k$ and/or a sequence of digital signals $y_k$, $k = 1, 2, \ldots$ such that the relationship between the $x_k$ signals and $y_k$ signals is $y_k = \Sigma_{j \geq 0} f_j x_{k-j}$,

said symbols $y_k$ being a sequence in a given modulation code, said apparatus being characterised in that it comprises an encoder adapted to cause said $x_k$ and $y_k$ signals to have any selectable variances $S_x$ and $S_y$ within predetermined ranges.

11. Apparatus according to any preceding claim, characterised in further comprising an output at which said sequence $y_k$ is adapted operatively to be delivered.

12. Apparatus according to any preceding claim, characterised in further comprising an output at which said sequence $x_k$ is adapted operatively to be delivered.

13. Apparatus according to any preceding claim, further characterised in that $y_k$ and $x_k$ are real valued.

14. Apparatus according to any of Claims 1 to 12, further characterised in that $y_k$ and $x_k$ are complex valued.

15. Apparatus according to any preceding claim, further characterised in that said modulation code is a trellis code.

16. Apparatus according to any of Claims 1 to 14, further characterised in that said modulation code is a lattice code.

FIG. 1

FIG. 2

FIG. 3

FIG. 4

FIG. 7

FIG. 5

FIG. 6

FIG. 8

Block diagram (top):

51 → p → CONVOLUTIONAL ENCODER C (52) → p + r (54) → SELECT N COSET REPRESENTATIVE $c_k$ (58) → $c_k$ → COSET REPRESENTATIVE SEQUENCE (60) → SIGNAL POINT SELECTOR $x_k = f(c_k, a_k)$ (68) → $x_k$ (70) → SIGNAL POINT SEQUENCE

UNCODED BITS

q (56)

n-p-q (62) → SELECT N RANGE SELECTORS $a_k$ (64) → $a_k$ (66) → SIGNAL POINT SELECTOR SEQUENCE

OPERATES ONCE EVERY N SIGNALS

OPERATES ONCE EACH SIGNAL

FIG. 9

50 → p → RATE p/(p +r) CONVOLUTIONAL ENCODER (52) → p + r (54) → SUBSET SELECTOR/ SERIALIZER (70) → $c_k$ → COSET SEQUENCE → (+) (72) (MOD 4) → $c_k'$ → $c_k'$(MOD 4) → PRECODED COSET SEQ. (74) → $(c'(D)) = c(D)/f(D)$(MOD 4)

$C_{k-1}'$ → D

GROUPS OF N $C_k'$

GROUPER (75)

UNCODED BITS, 78 → SIGNAL POINT SELECTOR/ SERIALIZER (76) → $x_k$

EP 0 397 536 A2

**FIG.10**

EP 0 397 536 A2

FIG. 11

FIG. 12

FIG. 13

EP 0 397 536 A2

FIG. 14

EP 0 397 536 A2

$$x(D) \longrightarrow \boxed{H_T(f)} \xrightarrow{\ s(t)\ }$$

FIG. 15

$$y(D) \longrightarrow \boxed{\ \dfrac{1}{1-D}\ \left|\ H_T(f)\ \right.} \xrightarrow{\ s(t)\ }$$

$$\underbrace{\qquad\qquad\qquad}_{H_T{'}(f)}$$

FIG. 16

$$i(D) \longrightarrow \boxed{\ \dfrac{1}{1-\beta D}\ \left|\ H_T(f)\ \right.} \xrightarrow{\ s(t)\ }$$

$$\underbrace{\qquad\qquad\qquad}_{H_T{''}(f)}$$

FIG. 17

FIG. 18

Box 92: FOR EACH $c_{jk}$, j=1,2,3,4 FIND THE $\hat{y}_{jk} \equiv c_{jk}$ MODULE 4 SUCH THAT $m_{jk} = (\hat{y}_{jk} - z_k)^2$ IS MINIMUM STORE METRIC $m_{jk}$, $\hat{y}_{jk}$

Input: $Z_k$

Output: $M_{JK}$

Box 94: FOR EACH OF $2^{p+r}$ COSETS OF $\Lambda'$ IN $\Lambda$, FOR EACH OF THE $2^q$ COSETS OF $4Z^N$ IN $\Lambda'$, SUM THE N METRICS $m_{ij}$ CORRESPONDING TO THAT COSET OF $4Z^N$ AND CHOOSE THE LEAST AS THE METRIC OF THAT COSET OF $\Lambda'$

SEQUENCE OF $\hat{c}_k$ CORRESPONDING TO EACH COSET OF $\Lambda'$

METRICS OF COSETS $\Lambda'$ IN $\Lambda$

$\hat{y}_{jk}$ CORRESPONDING TO EACH $c_{jk}$

Box 96: MAXIMUM LIKELIHOOD SEQUENCE ESTIMATOR (VITERBI ALGORITHM) FINDS BEST SEQUENCE OF COSETS OF $\Lambda'$ IN THE CODE

DECODED SEQUENCE OF COSETS OF $\Lambda'$

Box 98: MAP DECODED SEQUENCE OF COSETS OF $\Lambda'$ BACK TO DECODED $\hat{y}_k$ AND $\hat{x}_k$

ADJUST $\hat{x}_{k-1}$

$\hat{y}_k, \hat{x}_k$

Box 99: MONITOR FOR RANGE VIOLATIONS; ADJUST $\hat{x}_{k-1}$ AS NEEDED

$s_k$ → | SELECT $y_k \in {}_{RO} + R(x_{k-1})-x_{k-1}$ SUCH THAT $y_k \equiv s_k \; MOD \; M.$ | → $y_k$

$x_k$

$x_{k-1}$

D

**FIG 19**

$s_k$ + → $s_k$ → | SELECT $y_k \in R_O + R(x_{k-1}) - x_{k-1}$ SUCH THAT $y_k \equiv s_k' \; MOD \; M$ | → $x_k$

$x_{k-1}$

$x_{k-1}$

D

+ − $y_k$

**FIG. 20**

$s_k$ + → $s_k''$ → | SELECT $i_k \in R_O$ SUCH THAT $i_k \equiv s_k'' \; MOD \; M$ | → $i_k$ + + $(R(x_{k-1})$ $x_k$

$x_{k-1} - R(x_{k-1})$

R(.) D

− + $x_{k-1}$ + − $y_k$

**FIG. 21**

FIG. 22

EP 0 397 536 A2

RATE 2/3
8-STATE
ENCODER

SELECT
PAIRS
$(c_1, c_2)$

$c_k$

$f(c_k + a_k)$
=
$c_k + a_k$

$s_k$

$x_k$

(MOD 16)

$x_{k-1}$

D

SERIALIZE
BY PAIRS
$(a_1, a_2)$

$a_k$

FIG. 23

OPERATES ONCE
EACH PAIR OF SIGNALS

OPERATES
ONCE EACH SIGNAL

$s_k$

$s_k'$

SELECT
$x_k \in R_O + R(x_{k-1})$
SUCH THAT
$y_k \equiv s_k$ MOD 16

$x_k$

$x_{k-1}$

D

$x_{k-1}$

$y_k$

FIG 24

EP 0 397 536 A2

FIG 25

FIG 26

FIGURE 27

FIGURE 28

FIGURE 29

ORIGINAL
CONSTELL-
ATION OF
FIGURE 3

99

98

12

12

12

12

102

101

EP 0 397 536 A2

FIG. 30

2 → ENCODER C → 3 CODED BITS → SELECT COSET (104)

106

4 UNCODED BITS → SELECT SIGNAL POINT (105)

$Y_{.0,k}$

$Y_{0,k+1}$

SELECT
$(y_k, y_{k+1}) \in R(x_k\text{-}1)$
SUCH THAT
$(y_k{}'y_{k+1}) \equiv (y_{0,K} \ y_{0,k+1})$
MODULE M

$y_k$

$y_{k+1}$

$x_k$

$X_{K\text{-}1}$

D

$\beta y_{K1MAX}-12$

$=\beta y_{K1MID}+6\beta-12$

$\beta y_{K1MAX}=\beta y_{K1MID}+6B$

$\beta y_{K1MID}$

$y_k$

$6-(1-\beta)x_{k-1}=y_{k1MAX}$

$-(1-\beta)x_{k-1}=y_{k1MID}$

$-6-(1-\beta)x_{k-1}=y_{k1MIN}$

$\beta y_{K1MIN}=$

$\beta y_{K1MIN}+12$

$\beta y_{K1MID}-6\beta$    $\beta y_{K1MID}-6B+12$

$y_{k+i}$

FIGURE 31

120

-2,-2

124

$x_{k-1}$ POSITIVE

+2,+2

122

126

$x_{k-1}$ NEGATIVE

FIGURE 32

FIGURE 33